(19) Europäisches Patentamt
European Patent Office
Office européen des brevets

(11) EP 0 731 730 B1

(12) **FASCICULE DE BREVET EUROPEEN**

(45) Date de publication et mention de la délivrance du brevet:
**03.07.2002 Bulletin 2002/27**

(21) Numéro de dépôt: **95933477.2**

(22) Date de dépôt: **04.10.1995**

(51) Int Cl.$^7$: **B01J 45/00**, C08F 12/32

(86) Numéro de dépôt international:
**PCT/FR95/01287**

(87) Numéro de publication internationale:
**WO 96/11056 (18.04.1996 Gazette 1996/17)**

(54) **POLYAZACYCLOALCANES, COMPLEXES TRI-, TETRA- OU PENTAAZAMACROCYCLIQUES GREFFES SUR UN SUPPORT**

AUF TRÄGERMATERIAL GEPROFTE POLYAZACYCLOALKANE TRI-, TETRA- ODER PENTAAZAMAKROZYCLISCHE COMPLEXE

POLYAZACYCLOALKANES, TRI, TETRA OR PENTAAZAMACROCYCLIC COMPLEXES GRAFTED TO A SUPPORT

(84) Etats contractants désignés:
**AT BE CH DE DK ES GB GR IE IT LI LU MC NL PT SE**

(30) Priorité: **05.10.1994 FR 9411904**

(43) Date de publication de la demande:
**18.09.1996 Bulletin 1996/38**

(73) Titulaires:
- **COMMISSARIAT A L'ENERGIE ATOMIQUE 75015 Paris Cédex 15 (FR)**
- **L'air Liquide, S.A. à Directoire et Conseil de Surveillance pour l'Etude et l'Exploitation des Procédés Georges Claude 75321 Paris Cedex 07 (FR)**

(72) Inventeurs:
- **GUILARD, Roger F-21121 Fontaine-les-Dijon (FR)**
- **CHOLLET, Hervé F-21380 Asnières-les-Dijon (FR)**
- **GUIBERTEAU, Philippe F-21380 Messigny-et-Vantoux (FR)**
- **COCOLIOS, Panayotis F-78150 Le Chesnay (FR)**

(74) Mandataire: **Des Termes, Monique Société Brevatome 3, rue du Docteur Lancereaux 75008 Paris (FR)**

(56) Documents cités:
**EP-A- 0 306 334**
**EP-A- 0 437 875**
**EP-A- 0 442 110**
**WO-A-89/12119**
**FR-A- 2 613 718**
**US-A- 5 120 443**

- **REACTIVE POLYMERS, vol. 3, no. 2, Avril 1985 pages 101-106, WALENTY SZCZEPANIAK 'SYNTH. AND PROP. OF A CHELATING RESIN CONT. A MACROCYCLIC TETRAAZA SYSTEM AS ACTIVE GROUP'**
- **CHROMATOGRAPHIA, vol. 29, no. 9-10, Mai 1990 pages 495-499, BAGNOUD 'OUTER-SPHERE LIGAND-EXCHANGE CHROMATOGRAPHY WITH COPPER-LOADED MACROCYCLIC-BONDED SILICA COLUMN' cité dans la demande**

Remarques:
Le dossier contient des informations techniques présentées postérieurement au dépôt de la demande et ne figurant pas dans le présent fascicule.

EP 0 731 730 B1

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Printed by Jouve, 75001 PARIS (FR)

## Description

La présente invention concerne des polyazacycloalcanes, des complexes tri-, tétra-, ou pentaazamacrocycliques, un procédé de fabrication de ces polyazacycloalcanes substitués ou non, greffés soit sur un polymère organique, soit sur un gel de silice et les utilisations de tels polyazacycloalcanes greffés dans l'élimination de cations métalliques présents dans un liquide qui peut être un effluent et de complexes de polyazacycloalcanes dans la séparation du dioxygène de l'air.

Actuellement, les effluents des usines de retraitement de combustibles nucléaires irradiés et les effluents technologiques de centres nucléaires sont traités dans une tour d'évaporation industrielle, c'est-à-dire une colonne à plateaux dans laquelle on réalise une distillation sous pression réduite. Une telle technique a permis d'appauvrir des effluents à faible contamination $\alpha$, c'est-à-dire par exemple pour le centre du C.E.A. (COMMISSARIAT A L'ENERGIE ATOMIQUE) de VALDUC, des effluents ayant une contamination inférieure à $1{,}5{:}10^7$ Bq/m$^3$ en éléments $\alpha$ et inférieure à 50 g/l en charge saline. On obtient un concentrat contenant la quasi-totalité de l'activité $\alpha$ et une charge saline de l'ordre de 300 g/l. Ce concentrat est traité et conditionné ultérieurement dans du béton. Cette technique permet également d'amener des évaporats qui constituent 90 % de la phase aqueuse des effluents traités, jusqu'à une activité de 300 à 500 Bq/m$^3$, donc bien inférieure à la valeur de rejet autorisée actuellement (1000 Bq/m$^3$). Cette technique permettait jusqu'à présent le rejet de ces effluents dans l'environnement, après contrôle des éléments toxiques, radiologiques et chimiques.

Or, à partir de 1994, les nouvelles normes imposées pour le rejet dans l'environnement des effluents sont beaucoup plus strictes. Ainsi, pour le Centre du C.E.A. de Valduc par exemple, tout rejet d'effluent devra présenter une contamination $\alpha$ au maximum de 1Bq/m$^3$. Ces effluents devront donc être totalement épurés pour atteindre le rejet "nul" à l'environnement.

La technique d'évaporation actuelle ne permet pas d'atteindre la nouvelle norme de rejet autorisée, car le phénomène d'entraînement de la contamination $\alpha$ à la vapeur ne peut être supprimé. Ainsi, cette technique n'est pas suffisamment efficace et conduit à l'obtention de solutions très faiblement chargées dont l'activité radioactive est comprise entre 200 et 300Bq$\alpha$ /m$^3$ (inférieure à 1000Bq$\alpha$/m$^3$).

Il est donc nécessaire de mettre au point des agents complexants permettant le traitement des évaporats issus des tours d'évaporation industrielles, afin d'éliminer les dernières traces en éléments émetteurs $\alpha$. En outre, ces agents complexants pourraient également être utilisés pour traiter les effluents en amont de la tour d'évaporation industrielle afin de pouvoir éventuellement remplacer cette tour, tout en obtenant des effluents présentant les activités conformes aux nouvelles normes de rejet dans l'environnement.

On connaît déjà d'après l'art antérieur des composés macrocycliques ayant d'excellentes propriétés complexantes vis-à-vis des cations, d'anions ou même de molécules neutres. Ainsi, le document FR 2 643 370 A (au nom de l'Air Liquide) décrit des dérivés de formule générale suivante :

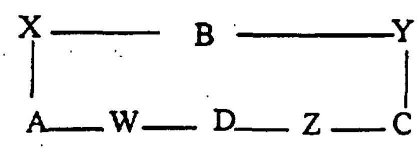

dans laquelle A, B, C et D peuvent représenter $-(CH_2)_x-$, x étant compris entre 1 et 4 et W, X, Y et Z peuvent représenter $= N-(CH_2)_y-COR$, y étant compris entre 1 et 4 et R représentant un groupe OH, $NH_2$ ou OR'. Ces dérivés peuvent être utilisés comme complexants d'éléments métalliques et sous forme complexée comme pièges à oxygène.

Toutefois, ces dérivés macrocycliques sont généralement très solubles dans l'eau. De ce fait, l'utilisation, la récupération et la régénération de ces dérivés en solution ne sont pas très aisées. Pour ces raisons, plusieurs modes de fixation ont été développés pour greffer ces dérivés macrocycliques sur des supports organiques ou inorganiques non aquasolubles. Ainsi, le brevet US 4 943 375 A divulgue un macrocycle greffé sur de la silice, utilisable dans une colonne de séparation pour piéger un ion donné présent dans une solution de plusieurs ions.

La demande de brevet FR 2 613 718 A décrit des tétramines cycliques greffées sur un polymère et susceptibles d'être utilisées pour l'extraction sélective et/ou le dosage des ions des métaux de transition et des métaux lourds. Toutefois, ces macrocycles greffés présentent l'inconvénient de ne pas être sélectifs d'un type particulier de métaux.

Dans le domaine du nucléaire, la demande de brevet EP 0 347 315 décrit un procédé pour séparer, au moyen d'éthers-couronnes, l'uranium et le plutonium présents dans un milieu aqueux provenant du retraitement des combustibles nucléaires irradiés. L'éther-couronne peut être le DCH 18C6, le DCH 24C8 ou le DB 18C6.

Les applications de ces polymères modifiés sont a priori nombreuses, telles que par exemple le piégeage d'éléments métalliques contenus dans des effluents, la purification de solvants organiques contaminés par divers cations produits dans l'industrie de l'électronique, (voir C. Pong, "Polymer material for electronic applications", E.D. Felt, C.W. Wilkin, Eds : ACS Symposium Series 184, American Chemical Society ; Whashington D.C., 1982, 171-183) ou l'utilisation de gels de silice modifiés par des complexes de cuivre, en chromatographie en phase liquide (voir M.A. Bagnoud, W. Haerdi, J.L. Veuthey, Chromatographia, 1990, 29, (9/10), 495-499). En outre, une application particulièrement intéressante concerne les propriétés de coordination sélective de molécules gazeuses ($O_2$, $CO_2$) que présentent un certain nombre de complexes formés par ces macromolécules avec Co(II), Fe(II), Mn(II), Cu(II), etc...

Durant la dernière décennie, un procédé de production du dioxygène d'un concept nouveau a été développé. S'inspirant des systèmes naturels de transport de dioxygène (hémoglobine, hémocyanine), il est réalisé en solution. Ce procédé met en oeuvre essentiellement les complexes $Co^{II}$, $Fe^{II}$, $Cu^{II}$ de tétraazamacrocycles, de bases de Schiff ou de porphyrines. Ces derniers fixent sélectivement le dioxygène de l'air et l'étape de désorption peut être réalisée par voie électrochimique. Ce procédé en solution est le plus souvent limité par la durée de vie des complexes oxygénés. Ceux-ci subissent en effet des réactions de dégradation irréversibles par hydrolyse acide pour former des complexes inertes n'ayant plus d'affinité pour le dioxygène.

Cependant, il a été démontré que le greffage de complexes capables de coordiner le dioxygène, sur des matrices solides organiques ou inorganiques permettait d'annihiler les processus de décomposition observés en solution, voir par exemple l'article de J.P. Collman et al., J. Am. Chem. Soc., 1973, 95, 2048 ou l'article de J.H. Fuhrhop et al., J. Macromol. Sci. Chem., 1979, A13, 545. De plus, une concentration suffisamment faible en complexes greffés éloigne raisonnablement les centres métalliques pour empêcher toute formation d'espèces binucléaires. Enfin, le choix d'un polymère relativement hydrophobe réduit la teneur en eau de la matrice et donc l'hydrolyse du complexe oxygéné.

Le document WO/89/12119 concerne, de manière très générale, un complexe organométallique immobilisé sur une phase solide choisie, notamment, parmi les silices et les polymères organiques. Ce complexe organométalliqùe comprend un ion de métal de transition complexé avec un chélate organique « multidentate ». Le ligant organique peut être une amine macrocyclique. De tels composés incluent, de manière générique, les tétraazamacrocycles, les pentaazamacrocycles et les hexaazamacrocycles. Les atomes d'azote cycliques, participant à la complexation par. coordination du métal, peuvent être primaires, secondaires ou tertiaires.

Ce document ne donne aucune information sur la nature du substituant dans le cas d'atomes d'azote tertiaires et recommande plutôt de mettre en oeuvre des groupements -NH.

Ce document divulgue aussi une méthode d'extraction de l'oxygène d'un environnement en contenant, comprenant la mise en contact de l'environnement oxygéné avec un complexe organométallique supporté sur une phase solide, susceptible de capter l'oxygène, ladite phase solide étant perméable à l'oxygène, mais non-miscible ou séparée de l'environnement comportant l'oxygène.

Le document EP-A-0 342 110, qui est cité dans le document précédent, décrit des ligands de type amine macrocyclique et, plus particulièrement, des tétraazamacrocycles, des pentaazamacrocycles et des hexaazamacrocycles.

Comme dans le document précédent, les azotes peuvent être éventuellement tertiaires, mais avec indication sur la nature des substituants de l'azote tertiaire, n'est donnée, et les formules données ne mentionnent explicitement que des macrocycles ou tous les azotes sont sous la forme N-H.

Ce document divulgue aussi un procédé d'extraction d'oxygène par voie électrochimique.

Le document EP-A-0 437 875 divulgue des ligands macrocycliques, tels que le cyclame (1,4,8,11-tétraazacyclotétradecane) supporté sur un polymère hydrophile, tel que les silices rendues hydrophiles avec des époxysilanes.

Lesdits cycles sont éventuellement N-mono ou di-substitués par un ou deux radicaux choisis pami :

$$-CH_2-CH_2-O(CH_2-CH_2-O)_n-CH_2-CH_2-OH,$$

$$-CH_2-CH_2-CH_2-O(CH_2-CH_2-CH_2-O)_n-CH_2-CH_2-CH_2-OH,$$

$$-CH_2-CH(CH_3)-CH_2-O(CH_2-CH(CH_3)-CH_2-O)_n-CH_2-CH(CH_3)-CH_2-OH.$$

Le macrocycle peut aussi être substitué sur ses carbones cycliques par : $(CH_2)_n-NH_2$ ou $(CH_2)_n-SH$, avec n = 1,2 ou sur un azote cyclique avec $-CH_2-CO_2H$.

Ce document divulgue aussi les complexes organométalliques obtenus par coordination d'un ion métallique avec le complexe immobilisé.

Ce document ne décrit pas la substitution de tous les azotes du macrocycle par les substituants mentionnés dans les revendications de la présente demande.

Le document EP-A-0 306 334 est relatif à des ligands macrocycles immobilisés sur de la silice, par exemple,

du sable ou du gel de silice.

La définition du macrocycle inclut les pentaazamacrocycles et les hexaazamacrocycles, les heptaazamacrocycles, les octaazamacrocycles ou les nonaazamacrocycles ; les atomes d'azote cycliques sont secondaires ou tertiaires. Lorsqu'il est tertiaire, le substituant R de l'azote est un alkyle C1-C4 ou un aryle.

Par ailleurs, ce document divulgue spécifiquement un polyazamacrocycle avec les azotes cycliques non substitués.

Ce document divulgue aussi une méthode d'épuration des eaux de certains ions métalliques.

Ce document ne divulgue pas la substitution de tous les atomes d'azote des macrocycles par les substituants spécifiques revendiqués dans la présente demande.

Le document « Reactive Polymers 3 (1985) 101 - 106 » décrit la préparation du cyclame : 1,4,8,11-tetraazacyclotétradécane immobilisé sur un copolymère styrène-divinylbenzène, ainsi que l'analyse de son affinité pour différents ions métalliques.

Le document FR-A-2 613 718 concerne, de façon générique, les tétramines cycliques mono fonctionnalisées, c'est-à-dire fonctionnalisées sur un seul atome d'azote.

Le substituant unique R est un radical organique saturé ou non, notamment polymérisable, de préférence R est un radical vinyl-benzyle. Les exemples citent, en outre, les radicaux dodécyle ou 4-cyanobutyle.

Ce document ne divulgue pas la substitution de tous les atomes d'azote du macrocycle.

Par ailleurs, dans ce document, ce sont les polymères issus de ces produits qui possèdent des propriétés de complexation, par exemple, des ions : Cu, Zn, Cd, Pb, Mn, Ni et Co. Le seul groupe R ne sert qu'à la polymérisation et ne joue aucun rôle dans la complexation des ions métalliques.

Enfin, le document « Outer-sphere Ligand Exchange Chromatography with Copper-Loaded Macrocyclic bonded Silica column » de M. A. BAGNOUD et al ; Chromatographia, vol. 29, no. 9/10, Mai 90, décrit amplement le greffage du cyclame sur la silice.

L'invention a pour but de résoudre les inconvénients de l'art antérieur.

A cet effet, l'invention concerne des polyazacycloalcanes, caractérisés en ce qu'ils répondent à l'une des trois formules (I), (II), (III) ci-dessous :

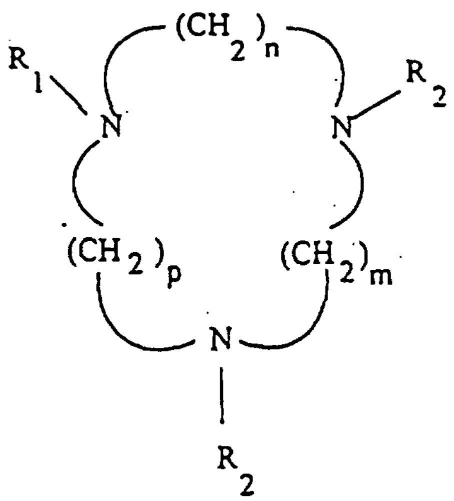

(I)

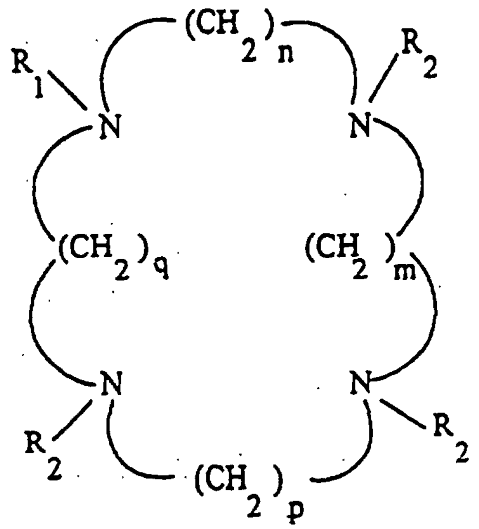

(II)

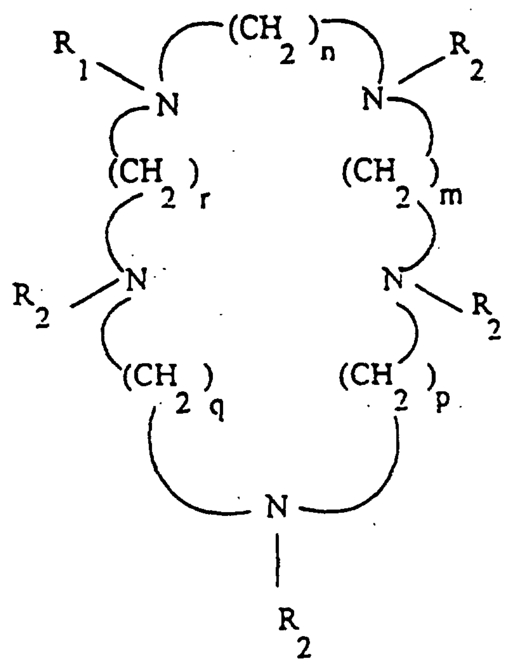

(III).

dans lesquelles n, m, p, q, r qui peuvent être identiques ou différents sont égaux à 2 ou 3, $R_1$ est un support solide, $R_2$ représente le groupe $(CH_2)_2$-$R_3$, $R_3$ étant un groupement fonctionnel choisi dans le groupe constitué par COOH, $CONH_2$, $CH_2OH$, CN ou $COOR_4$, $R_4$ représentant un groupe alkyle ou benzyle, ou $R_2$ représente le groupe -$(CH_2)$-$R_5$, $R_5$ représentant COOH ou $PO_3R_6$, $R_6$ représentant un groupe alkyle ou l'hydrogène,

Les gels de silice S tels qu'utilisés dans l'invention sont définis par KIRK-OTHMER ; Encyclopedia of Chemical Technology ; 3ème ed., vol. 20, p. 773-775.

Le support solide peut être un polymère organique, réticulé ou non et en particulier un reste d'un polymère organique réticulé ou non, à terminaison halogénure d'alkyle ou chlorure d'alkyle, tel qu'un reste d'un polystyrène chloro-méthylé de formule :

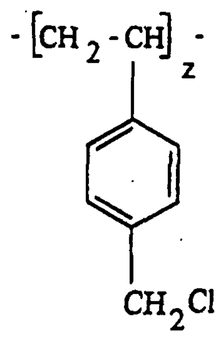

ou être un dérivé de la silice répondant à la formule :

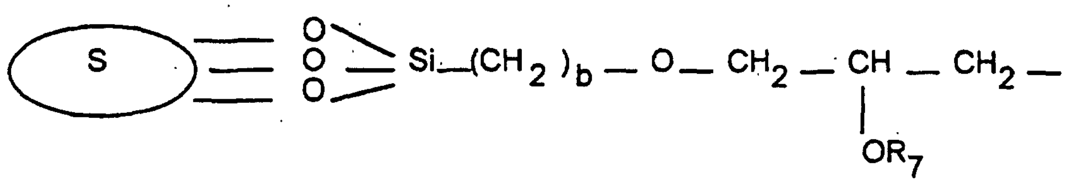

ou à la formule :

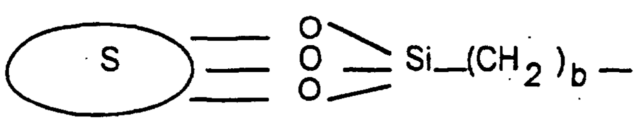

S représentant un gel de silice, b étant compris entre 1 et 4 et de préférence égal à 3 et $R_7$ étant un groupe alkyle ou un atome d'hydrogène.

On entend par reste d'un polymère organique réticulé ou non, à terminaison halogénure d'alkyle, un polymère dont le ou les halogènes ont été totalement ou partiellement substitués.

De préférence, la granulométrie du polystyrène chloro-méthylé et celle du support solide dérivé de la silice sont comprises entre 20 et 400 mesh, ou mieux entre 20 et 70 mesh. Il s'agit de la granulométrie du polystyrène chloro-méthylé et non de la granulométrie du reste qui peut être différente.

Lorsque tous les atomes d'azote de ces différents macrocycles sont substitués par des groupes propionate, ces macrocycles présentent de remarquables propriétés de complexants des métaux des séries des lanthanides et actinides et notamment de l'europium et du gadolinium. Une analyse aux rayons X montre que la coordination de l'atome métallique avec le macrocycle est réalisée par les atomes d'oxygène des groupements carboxylate alors que les macrocycles proches décrits par exemple dans l'article de Spirlet et al., Inorg. Chem. 1984, 359-363 ou dans l'article de Dubost et al., C.R. Acad. Sci. Paris Ser. 2, 1991, 312, 349-354, l'atome métallique est coordiné à la fois aux atomes d'azote et d'oxygène. Ce résultat est imputable à la nature des groupes portés sur les atomes d'azote des macrocycles selon l'invention.

$R_1$ étant un support solide, les macrocycles peuvent être utilisés dans des procédés de traitement des effluents utilisant des colonnes d'extraction.

Ainsi, lorsque le support solide est un gel de silice, le produit obtenu est d'un coût réduit, il est facilement régénérable par simple traitement à l'acide, stable dans la plupart des solvants organiques et inerte vis-à-vis de nombreux produits chimiques. En outre, ce produit peut être utilisé sous pression, en milieu comburant ou oxydant.

Lorsque le support solide est du type résine de Merrifield (marque déposée), commercicalisée par la Société Aldrich, le produit obtenu est physiologiquement inerte et peut être utilisé comme complexant sélectif d'éléments sanguins, par exemple pour l'élimination du cation $Cu^{2+}$ dans un traitement de dialyse.

L'invention concerne également un procédé de fabrication d'un polyazacycloalcane substitué, greffé sur un

support solide et consistant à faire réagir un excès de $CH_2$=CH-$R_3$, $R_3$ étant un groupe fonctionnel choisi parmi -COOH, -$CONH_2$, -$CH_2$-OH, -CN ou -$COOR_4$, $R_4$ étant un groupe alkyle ou benzyle, en présence d'un solvant polaire comme l'éthanol, de préférence l'éthanol absolu, avec un polyazacycloalcane greffé sur un support solide $R_1$, répondant à l'une des formules (VII), (VIII) ou (IX) suivantes :

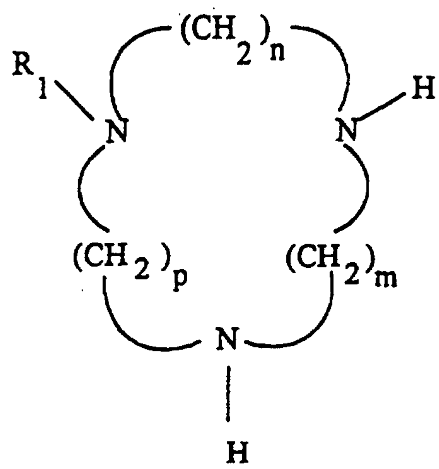

(VII)

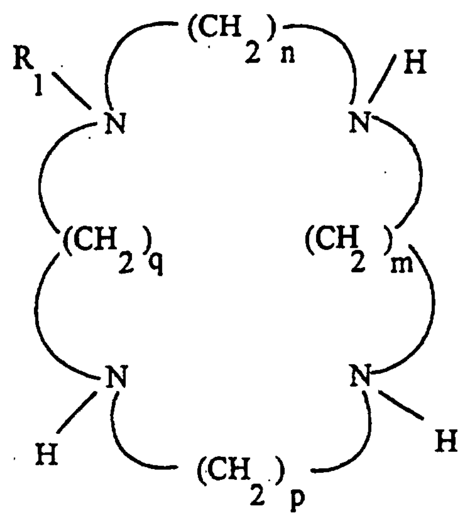

(VIII)

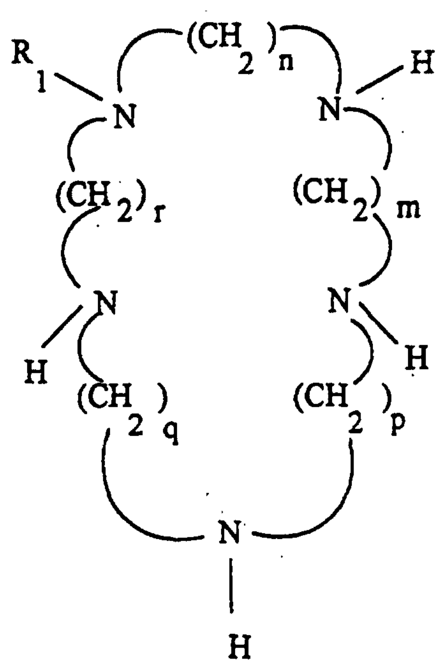

(IX)

dans lesquelles n, m, p, q ou r qui peuvent être identiques ou différents sont égaux à 2 ou 3, et $R_1$ est un support solide sur lequel est greffé l'atome d'azote et est choisi parmi un polymère organique réticulé ou non, de préférence un reste d'un tel polymère à terminaison halogénure d'alkyle du type résine de Merrifield (marque déposée) ou un dérivé de silice répondant à l'une des deux formules citées précédemment,

de façon à obtenir un polyazacycloalcane greffé sur un support solide et substitué, correspondant respectivement à l'une des formules (X), (XI), (XII) suivantes :

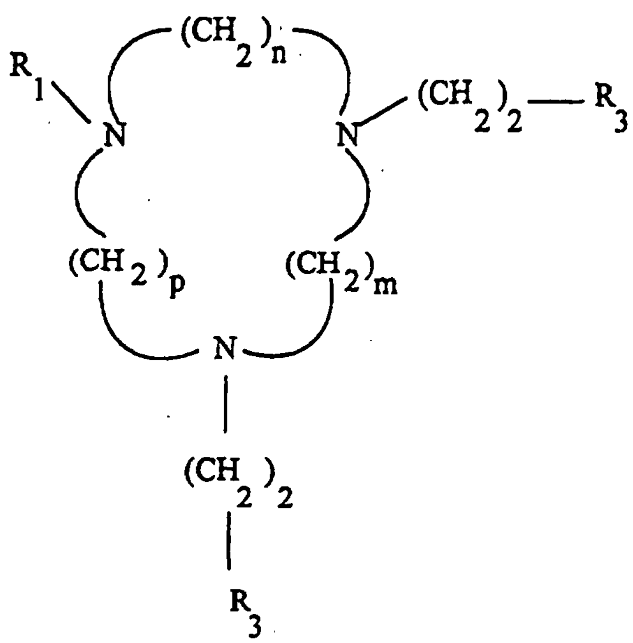

(X)

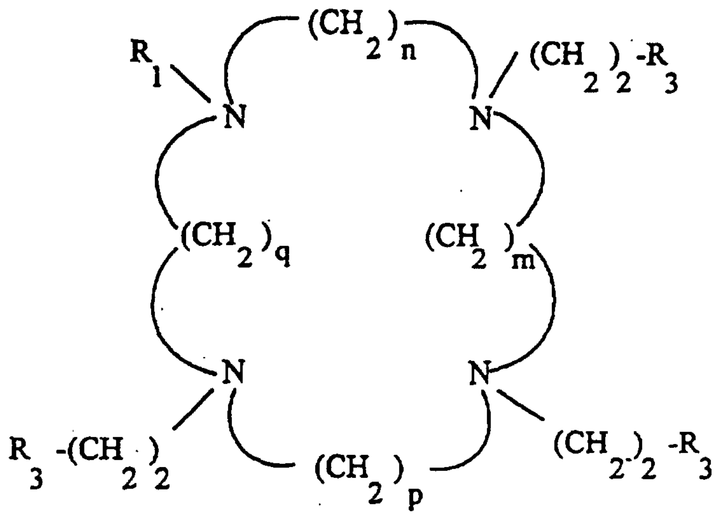

(XI)

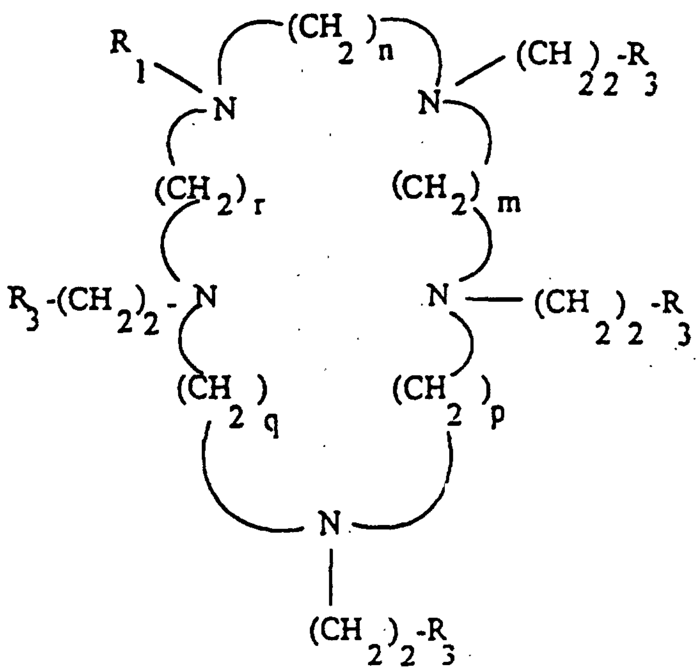

(XII)

dans lesquelles n, m, p, q, r, $R_1$ et $R_3$ ont la même signification que précédemment.

L'invention concerne également des complexes tri-, tétra- ou pentaazamacrocycliques de métaux de transition répondant à l'une des formules (IV), (V) ou (VI) suivantes :

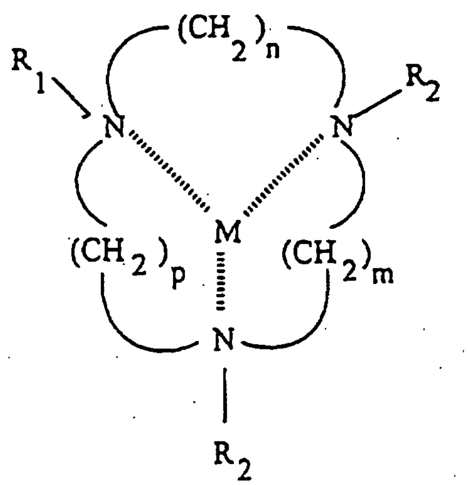

(IV)

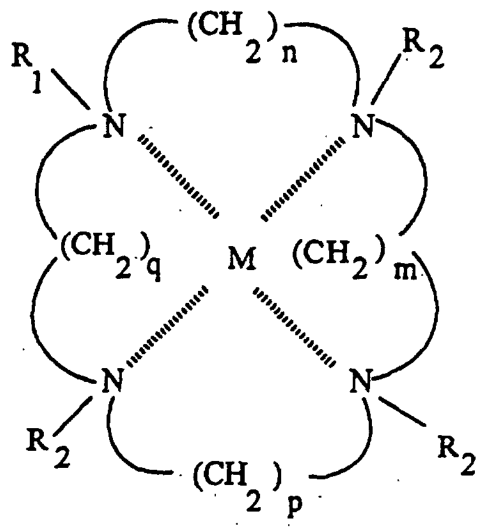

(V)

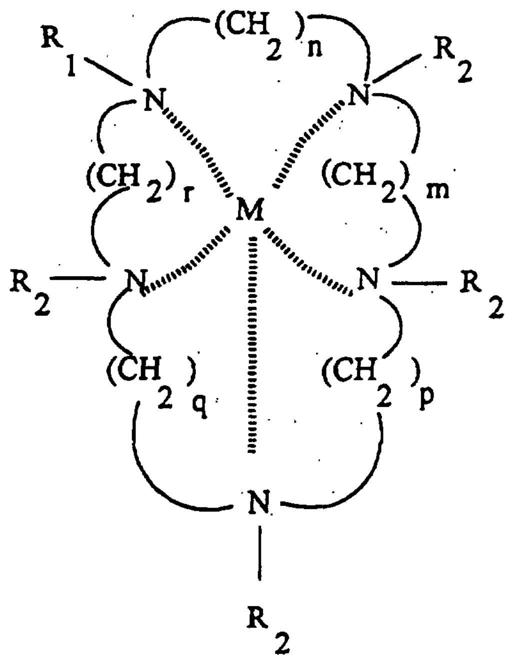

(VI)

dans lesquelles n, m, p, q, r qui peuvent être identiques ou différents sont égaux à 2 ou 3, M est un métal de transition choisi parmi Ti, Mn, Fe, Co, Ni, Cu, Ru, Rh et Ir, $R_1$ est un support solide du type polymère organique réticulé ou non, de préférence un reste d'un tel polymère à terminaison halogénure d'alkyle ou un dérivé de silice répondant à la formule :

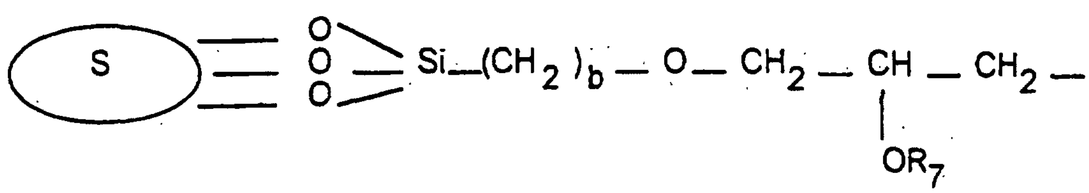

ou à la formule :

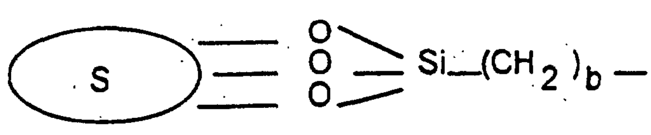

S représentant.un gel de silice, b étant compris entre 1 et 4 et de préférence égal à 3 et $R_7$ étant un groupe alkyle ou un atome d'hydrogène, et $R_2$ représente le groupe $(CH_2)_2$-$R_3$, $R_3$ étant un groupement fonctionnel choisi dans le groupe constitué par COOH, $CONH_2$, $CH_2OH$, CN ou $COOR_4$, $R_4$ représentant un groupe alkyle ou benzyle ou $R_2$ représente $(CH_2)$-$R_5$, $R_5$ représentant COOH ou $PO_3R_6$, $R_6$ représentant l'hydrogène ou un groupe alkyle.

Ces complexes peuvent intervenir dans des procédés de séparation ou de purification des gaz mais également lors de réactions catalytiques mettant en oeuvre des molécules gazeuses telles $O_2$, CO, $CO_2$ ou NO.

**[0048]** De tels complexes, plus particulièrement ceux à base de cobalt peuvent également être utilisés dans le conditionnement des aliments, par exemple en maintenant une atmosphère exempte d'oxygène.

Enfin, l'invention concerne l'utilisation d'un polyazacycloalcane selon l'invention pour l'élimination de cations métalliques contenus dans un liquide tel qu'un effluent ou du cuivre ou de l'aluminium contenu dans un fluide biologique, tel le sang. De tels cations sont de préférence des cations de métaux de transition, de métaux lourds, de métaux du groupe IIIa, des lanthanides ou des actinides et notamment U, Pu, Am, Ce, Eu, Gd, Al, Cr, Mn, Fe, Co, Ni, Cu, Zn, Ag,

Cd, Sn, Au, Hg ou Pb.

Enfin, l'invention concerne également l'utilisation des complexes précédemment décrits dans l'élimination d'oxygène d'un mélange de gaz contenant de l'oxygène.

L'invention sera mieux comprise à la lecture de la description suivante d'un mode de réalisation préférentiel de l'invention, donné à titre d'exemple illustratif et non limitatif, cette description étant faite en faisant référence aux dessins joints dans lesquels :

- la figure 1 est une courbe illustrant l'évolution du coefficient de partage Kd en fonction du pH pour une solution synthétique de nitrate d'uranyle ;
- la figuré 2 est une courbe illustrant l'évolution du coefficient de partage Kd en fonction du temps d'agitation pour une solution synthétique de nitrate d'uranyle ;
- la figure 3 est une courbe illustrant l'évolution du coefficient de partage Kd en fonction de la température pour une solution synthétique de nitrate d'uranyle ;
- les figures 4 et 5 représentent le pourcentage d'uranium élué à partir d'un polyazacycloalcane selon l'invention respectivement en fonction de la normalité de l'acide nitrique utilisé ou du temps de contact entre ledit polyazacycloalcane et cet acide ;
- la figure 6 représente l'évolution du coefficient de partage Kd d'uranium 238 fixé sur un polyazacycloalcane selon l'invention, sur 10 cycles d'extraction ;
- la figure 7 représente le pourcentage d'uranium 238 élué sur 10 cycles d'élution ;
- la figure 8 représente l'évolution de la teneur en trois cations (Ce, U, Eu) à la sortie d'une colonne remplie d'un polyazacycloalcane selon l'invention en fonction du volume de solution initiale qui s'est écoulé dans ladite colonne ;
- les figures 9 et 10 représentent respectivement l'évolution de la concentration en uranium à la sortie d'une colonne et du pourcentage d'uranium élue à partir de cette colonne, en fonction du volume d'acide nitrique 2N utilisé pour l'élution,
- la figure 11 est un schéma illustrant un dispositif utilisé lors de la fixation d'oxygène par un complexe selon l'invention.

Plusieurs exemples de fabrication de polyazacycloalcanes greffés sur un gel de silice et de complexes selon l'invention vont maintenant être décrits.

Dans la suite de la description, les noms des polyazacycloalcanes selon l'invention sont présentés sous une forme abrégée à des fins de simplification. Plus précisément, les polyazacycloalcanes à quatre atomes d'azote sont référencés sous la forme "$R_1$, une suite de chiffres, $R_2$" et répondent à la formule générale :

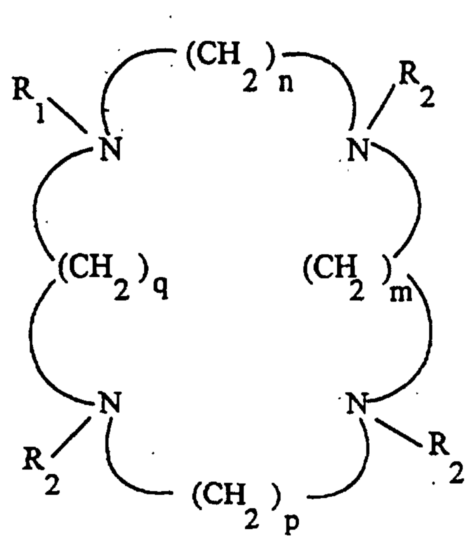

(II)

$R_1$ réprésentant le support Si, Si hydroxy ou Me, avec "Si" signifiant :

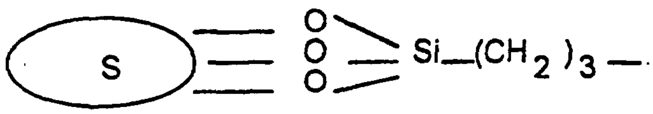

S = gel de silice
"Si hydroxy" signifiant :

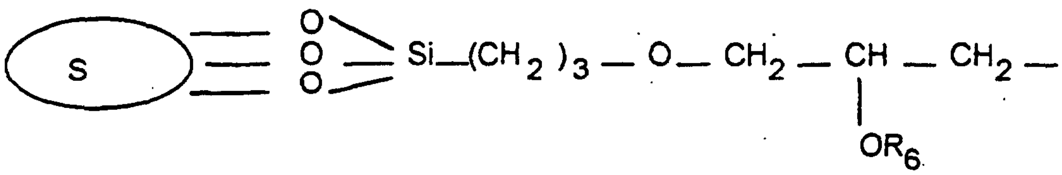

S = gel de silice
et "Me" signifiant résine de Merrifield de formule :

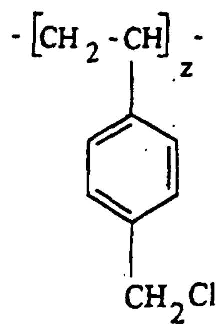

$R_2$ représentant TrP, TrA ou TrMP,
avec "Trp" signifiant : $(CH_2)_2$-COOH
"TrA" signifiant : $CH_2$-COOH
et "TrMP" signifiant : $CH_2$-$PO_3H$

Lorsque aucune indication n'est précisée pour $R_2$, cela signifie que $R_2$=H.

Lorsque la suite de chiffres est 2222 ou 3333, cela signifie que n, m, p et q sont tous égaux respectivement à 2 ou à 3. Lorsque la suite de chiffres est 2323, cela signifie que n et p sont égaux à 2 et m et q sont égaux à 3 ou inversement que n et p sont égaux à 3 et m et q sont égaux à 2.

Les polyazacycloalcanes à 3 ou à 5 atomes d'azote sont référencés de façon similaire. Ainsi, la suite de chiffres 232 signifie que parmi n, m et p, deux de ces lettres représentent 2 et l'autre représente 3.

**Exemple 1 : Synthèse de Si2323**

A une suspension de 50,0 g de silice sous forme de gel {(Kieselgel 60, Merk, 35-70 mesh) préalablement séchés à 150-170°C pendant 3 à 4 heures sous vide} dans 500 ml de m-xylène, sont ajoutés 9,0 g de 3-chloropropyltriéthoxysilane (0,038 mole) et 7,5 g de 1,4, 8, 11-tétraazacyclotétradécane (cyclame) (0,038 mole). Le milieu réactionnel est chauffé à reflux dans un ballon monocol surmonté d'un réfrigérant pendant environ 12 heures. Les billes de silice sont alors filtrées à l'abri de l'humidité, lavées au toluène puis à l'acétone et séchées sous vide pendant 5 à 6 heures (les billes ont un aspect légèrement jaunâtre).

Par analyse élémentaire des éléments carbone, azote et hydrogène et par analyse de résonance paramagnétique électronique (R.P.E.) après métallation du cyclame greffé sur silice par l'acétate de cuivre dans le méthanol à chaud, on quantifie le nombre de millimoles de cyclame greffé par gramme de support en dosant l'élément cuivre par R.P.E. Ce rapport est de l'ordre de 0,4.

Analyse élémentaire : %N=2,29 (équivaut à 0,4 mmole de cyclame par gramme de silice).

Analyse R.P.E. : 0,411 mmole de cyclame par gramme de silice.
Un autre exemple de fabrication est décrit ci-après.

**Exemple 2 : Synthèse de Si hydroxy 2323**

Dans un premier temps, on sèche sous vide à 100°C pendant 18 heures, 5 g de gel de silice (Kieselgel 60, Merk, taille 35-70 Mesh). On ajoute ensuite sous atmosphère d'argon 50 ml de toluène fraîchement distillé, 7 ml de 3-glycidyloxy-propyl-triméthoxysilane et 0,15 ml de triéthylamine. Le milieu réactionnel est alors porté à reflux pendant 12 heures. Après refroidissement à température ambiante, le gel de silice modifié (Si-GDP) est ensuite lavé par 70 ml de toluène anhydre, 100 ml d'acétone et 100 ml d'éther diéthylique.
Dans un second temps, on ajoute à une suspension de 1 g de la silice modifiée obtenue (Si-GDP dans 275 ml d'eau distillée), 0,6 g de 1,4,8,11-tétraazacyclotétradécane (cyclame). Le milieu réactionnel est porté à reflux pendant 12 heures. Après refroidissement à température ambiante, le gel de silice modifiée Si hydroxy 2323 est filtré et lavé de nombreuses fois à l'eau distillée.
Le produit obtenu se présente sous forme de billes de granulométrie 35 à 70 mesh et l'analyse RPE donne 0,36 mmole de cyclame par gramme de silice.
Un exemple de substitution d'un polyazacycloalcane greffé sur un gel de silice est décrit ci-dessous.

**Exemple 3 : Synthèse de Si2323TrP**

A une suspension de 50,0 g de gel de silice modifié par le cyclame (0,4 mmole de cyclame/g de résine obtenu comme .décrit dans l'exemple 1) dans 750 ml d'éthanol absolu, sont ajoutés, goutte à goutte et sous agitation vigoureuse, 100 g d'acide acrylique (1,5 moles) dissous dans 250 ml d'éthanol absolu. Le milieu réactionnel est maintenu à température ambiante pendant l'addition puis est porté à reflux pendant 12 heures. Le mélange est filtré et les billes sont lavées à l'éthanol, à l'éther diéthylique puis à l'acétone. Le gel de silice ainsi modifié est ensuite séché sous vide pendant 10 heures.
L'analyse élémentaire des éléments carbone, azote et hydrogène confirme la présence de 0,4 mmole de cyclame trisubstitué par des groupes propionate ($-CH_2-CH_2-CO_2H$) par gramme de résine. L'étude spectroscopique Infra-Rouge du matériau en suspension dans le nujol révèle la présence de liaisons "C=O" et "C-O-H".

Analyse élémentaire :

%N=2,30 équivaut à 0,4 mmole de cyclame par gramme de silice.
%C=11,46 (Théorique 10,80%),
%H=2,24 (Théorique 1,68%),
Analyse Infra-Rouge :
"C=O" 1733 $cm^{-1}$
"C-O-H" 1405 $cm^{-1}$

Deux exemples de fabrication de polyazacycloalcanes de formule (II) précitée dans laquelle $R_2$ représente $(CH_2)-R_5$ sont décrits ci-dessous.

**Exemple 4 : Synthèse de Si2323TrA**

Un polyazacycloalcane de formule (II) précitée, dans laquelle $R_1$ est un dérivé de silice de formule :

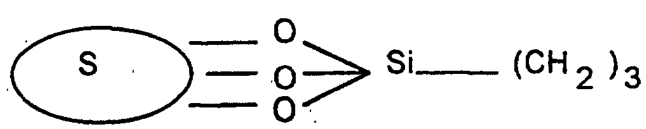

$R_2$ représente $CH_2-COOH$ et n, p = 2 et m, q =3 ou l'inverse a été synthétisé en faisant réagir Si2323 avec l'acide bromoacétique.
On réalise la substitution des atomes d'azote restant libres du macrocycle en opposant le dérivé Si2323 au

produit halogéné dans l'acétonitrile en présence de carbonate de potassium et d'un agent de transfert de phase. On porte le mélange à reflux pendant 12 heures. On filtre, lave et sèche le produit attendu. Ce produit est caractérisé par analyse R.P.E., par analyse élémentaire et par spectroscopie I.R. Les résultats sont donnés ci-après.

| Analyse R.P.E. méquivalent de cycle/ gramme de support | Analyse élémentaire méquivalent de cycle/gramme de support | Analyse Infra-Rouge |
|---|---|---|
| 0,25 | 0,245 | I.R.:ν(C=0)=1736,8 $cm^{-1}$ |

**Exemple 5 : Synthèse de Si2323TrMP**

Un polyazacycloalcane de formule (II) précitée, dans laquelle $R_1$ est un dérivé de silice de formule :

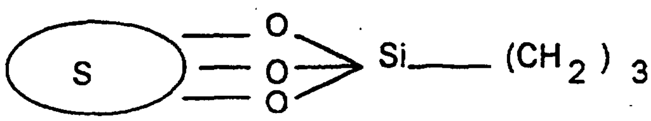

$R_2$ représente $CH_2$-$PO_3H$ et n, p = 2 et m, q = 3 ou l'inverse a été synthétisé en faisant réagir le composé Si2323 avec l'acide phosphoreux et le formaldéhyde. On oppose le composé Si2323 à ces deux réactifs dans une solution aqueuse acide. On porte le mélange à reflux puis isole le produit attendu par filtration, lavage et séchage. Ce composé est caractérisé par analyse R.P.E., par analyse élémentaire et par R.M.N. C.P. Mass. Les résultats sont donnés ci-après.

| Analyse R.P.E. méquivalent de cycle/ gramme de support | Analyse élémentaire méquivalent de cycle/gramme de support | R.M.N. C.P. Mas. |
|---|---|---|
| 0,29 | 0,255 | R.M.N. ($^{31}P$):$\delta$=12,1 ppm |

Deux exemples de fabrication de tri- et de penta-azacycloalcanes sont donnés ci-après.

**Exemple 6 : Synthèse de Si232 (composé comparatif)**

Après séchage sous vide à 150°C pendant 3 heures de 5,0 g de gel de silice (Kieselgel 60, Merk, taille 35-70 mesh), on additionne 50 ml de xylène, 1,80 g de 3-chloropropyltriéthoxysilane (0,0075 mole) et 2,0 g de 1,4,8-triazacyclododécane. Le milieu réactionnel est ensuite porté à reflux pendant 12 heures. Les grains de silice sont alors filtrés à l'abri de l'humidité, lavés au. toluène et à l'acétone puis séchés plusieurs heures sous vide. La quantification est réalisée par R.P.E..

**Exemple 7 : Synthèse de Si22332 (composé comparatif)**

Après séchage sous vide à 150°C pendant 3 heures de 5,0 g de gel de silice (Kieselgel 60, Merk, taille 35-70 mesh), on additionne 50 ml de xylène, 1,80 g de 3-chloropropyltriéthoxysilane (0,0075 mole) et 3,0 g de 1,4,7,11,15-pentaazacyclooctadécane. Le milieu réactionnel est ensuite porté à reflux pendant 12 heures. Les grains de silice sont alors filtrés à l'abri de l'humidité, lavés au toluène et à l'acétone puis sechés plusieurs heures sous vide. La quantification est réalisée par R.P.E.

Des exemples de fabrication de complexes sont donnés ci-après.

Ces complexes peuvent être synthétisés à partir d'un polyazacycloalcane non substitué greffé sur un support solide correspondant à l'une des formules (VII), (VIII) ou (IX) précitées, par ajout d'un équivalent de $CoCl_2$, $6H_2O$ en suspension dans l'eau, dans le cas d'un complexe de cobalt. Après un temps de réaction de 12 heures environ le support solide (silice ou résine de Merrifield) est filtré et séché.

Les complexes peuvent également être fabriqués de la façon suivante.

**Exemple 8 : Réaction de métallation du Si2323 par un sel de cobalt sous atmosphère inerte**

Le gel de silice Si2323 est mis en suspension, sous argon, à chaud pendant 10 heures et avec une forte agitation, dans une solution méthanolique saturée en acétate de cobalt II. L'excès d'acétate de cobalt est éliminé par lavage au méthanol, après filtration sous argon, du gel de silice ainsi complexé.

L'enregistrement sous argon, du spectre de Résonance Paramagnétique Electronique permet de vérifier que la réaction de métallation est bien effective.

**Exemple 9 : Réaction de métallation du Si2323 par un sel de cuivre**

Le gel de silice Si2323 est mis en suspension, à chaud, pendant 10 heures et avec une forte agitation, dans une solution méthanolique saturée en acétate de cuivre II. L'excès d'acétate de cuivre est éliminé par lavage au méthanol du gel de silice ainsi complexé.

L'enregistrement du spectre de Résonance Paramagnétique Electronique permet de vérifier que la réaction de métallation est bien effective.

**Exemple 10 : Réaction de métallation du Si2323 par un sel de plomb**

Le gel de silice Si2323 est mis en suspension, à chaud, pendant 10 heures et avec une forte agitation, dans une solution méthanolique saturée en acétate de plomb II. L'excès d'acétate de plomb est éliminé par lavage au méthanol après filtration du gel de silice ainsi complexe. Une analyse élémentaire permet de vérifier que la réaction de métallation est bien effective.

**Exemple 11 : Détermination du coefficient de partagé Kd à partir de solutions synthétiques d'uranium**

Des essais de fixation des actinides sur différents macrocycles greffés sur un support et substitués (selon l'invention) ou non ont été effectués par détermination du coefficient de partage Kd.

Parmi les différentes façons de définir le coefficient de partage, la formule suivante a été retenue :
Kd={[moles de soluté fixées]/[gramme de produit analysé]} /{[moles de soluté restantes]/[millilitre de solution]}
soit pour un soluté S :

$$Kd = \frac{[So] - [S]}{[S]} X \frac{V}{m}$$

où [So] = activité de S dans la solution initiale
[S] = activité de S dans la phase liquide après contact
V = volume de solution introduite sur le gel de silice ou la résine Merrifield (en millilitre)
m = masse de gel de silice ou de résine Merrifield introduite (en gramme).

**Mode opératoire :**

Le Kd est déterminé en utilisant une solution d'uranium 238 à environ 1,5 g/l. Les essais sont effectués avec 500 mg de gel de silice, à une température de 23°C. Le temps d'agitation est de 3 minutes et le temps de repos est de 18 heures.

Les résultats obtenus sont donnés ci-après dans le tableau 1.

Tableau 1

| Produit | Coefficient de partage (Kd) |
|---|---|
| • résine de Merrifield seule | 10 |
| • Me2323 | 10 |
| Me2323TrP | 20 |
| silice seule | 52 |
| Si2323 | 52 |
| Si2323TrP | 100 |

Le produit ayant donné le meilleur résultat dans l'exemple précité, c'est-à-dire Si2323TrP qui est conforme à l'invention, a ensuite été testé en faisant varier les conditions expérimentales de pH, de temps d'agitation et de température.

a) **Etude du coefficient de partage (Kd) en fonction du pH sur une solution synthétique de nitrate d'uranyle**

**Mode opératoire :**

On pèse exactement 0,1 g de Si2323TrP que l'on place dans des fioles. Dans chacune de celles-ci, 15 ml de solution de nitrate d'uranyle d'une concentration de 1,6 g/l ajustés à des valeurs de pH différentes par de la soude 1,0 N sont versés et agités pendant 3 minutes à température ambiante (23°C). Les fioles restent sans agitation pendant 18 heures de façon à assurer un temps de contact suffisant entre le gel de silice et la solution synthétique de nitrate d'uranyle. Ensuite, les solutions sont filtrées et les filtrats analysés par spectrométrie d'émission à plasma.

**Résultats :**

Les résultats obtenus sont représentés sur la figure 1 jointe. On constate que le pH de la solution traitée doit être supérieur à 3 pour commencer à obtenir une extraction de l'uranium par le gel de silice. Pour un pH supérieur à 4,3, le coefficient de partage Kd est voisin de 50. Enfin, dans les conditions optimales de pH, c'est-à-dire pour un pH supérieur ou égal à 5, un coefficient de partage de l'ordre de 100 est observé. Ceci est particulièrement avantageux lors de la mise en oeuvre industrielle d'un procédé de traitement utilisant le Si2323TrP puisque les effluents présents en amont d'une tour d'évaporation ont un pH généralement supérieur ou voisin de 7 et que les effluents issus de ladite tour ont un pH supérieur à 4,5.

b) **Etude du coefficient de partage (Kd) en fonction du temps d'agitation sur une solution synthétique de nitrate d'uranyle**

**Mode opératoire :**

On pèse exactement 0,1 g de Si2323TrP que l'on place dans des fioles. Dans chacune de celles-ci, 15 ml de solution de nitrate d'uranyle de teneur proche de 1,6 g/l ajustés à pH=4,82 sont versés et agités pendant des temps variables à température ambiante (23°C). Les fioles sont directement filtrées et les filtrats analysés par spectrométrie d'émission à plasma.

**Résultats :**

On trace. la courbe donnant le coefficient de partage Kd en fonction du temps d'agitation (voir figure 2). En prolongeant le temps d'agitation, la teneur en uranium de la solution traitée peut être abaissée d'un facteur cinq. Ce résultat permet de préciser le temps de séjour minimum dans la colonne pour obtenir une efficacité maximale. Ce temps est compris entre 10 et 30 minutes.

c) **Etude du coefficient de partage (Kd) en fonction de la température sur une solution synthétique de nitrate d'uranyle**

**Mode opératoire :**

On pèse exactement 0,1 g de Si2323TrP que l'on place dans des fioles. Dans chacune de celles-ci, 15 ml de solution de nitrate d'uranyle de concentration proche de 1,6 g/l ajustés à pH=4,82 sont versés et agités pendant 2 minutes à des températures variables. Les fioles restent un quart d'heure sans agitation, toujours à la même température, puis les solutions sont filtrées et les filtrats analysés par spectrométrie d'émission à plasma.

**Résultats :**

On trace la courbe donnant le coefficient de partage Kd en fonction de la température du milieu pendant l'expérience (voir figure 3). On note que le coefficient de partage augmente avec la température (gain d'un facteur 2) lorsque la température passe de 20 à 60°C.

d) **Mesure du coefficient de partage de différents macrocycles selon l'invention**

Par ailleurs, différents macrocycles greffés sur gel de silice et substitués (conformément à l'invention) ou non (non conformes à l'invention) ont été testés afin de mesurer leur coefficient de partage respectifs par rapport à une solution synthétique de nitrate d'uranyle.

Les résultats obtenus sont représentés dans le tableau 2 ci-dessous.

Tableau 2

| Matériaux non substitués (comparatifs) | | | |
|---|---|---|---|
| Matériau | Si2222 | Si2323 | Si3333 |
| Coefficient de partage Kd | 45 | 41 | 49 |
| Matériaux substitués (conformes à l'invention) | | | |
| Matériau | S12222TrP | Si2323TrP | Si3333TrP |
| Coefficient de partage Kd | 100 | 74 | 61 |
| Matériau | Si2323TrA | Si2323TrMP | Sihydroxy2323TrP |
| Coefficient de partage Kd | 298 | 420 | 807 |

A titre de comparaison, le coefficient de partage de la silice seule est compris entre 40 et 50.

Lorsqu'on fait varier la taille de la cavité des macrocycles ne possédant pas de substituants, on s'aperçoit que le coefficient de partage varie entre.40 et 50, valeur équivalente à celle trouvée sur le gel de silice seul. Par contre, en. ce qui concerne les matériaux possédant des bras propionate (TrP), on observe en moyenne un doublement de la capacité d'extraction et le macrocycle de plus faible cavité (n, m, p et q égaux à 2) semble être le plus efficace.

Si on considère une taille de macrocycle donnée, en faisant varier la longueur et la nature des substituants du macrocycle, on augmente considérablement la capacité d'extraction surtout en ce qui concerne le matériau Sihydroxy2323TrP. Il est à noter que le matériau Si2323TrMP porteur d'atomes de phosphore s'avère lui aussi très efficace.

**Exemple 12 : Essais de fixation d'un métal en mode statique**

**a) Essai d'élution d'un métal fixé sur du gel de silice Si2323TrP au moyen d'une solution d'acide nitrique**

On pèse exactement 0,1 g de gel de silice Si2323TrP que l'on place dans une fiole et on ajoute 15 ml d'une solution synthétique (A) de nitrate d'uranyle de teneur proche de 1,6 g/l et ajustée à un pH de 4,82. La solution est agitée pendant 3 minutes à température ambiante (23°C), puis on abandonne le mélange sans agitation pendant un temps de contact de 18 heures. En outre, la solution est filtrée de façon à la séparer du gel. Ce filtrat est analysé par spectroscopie d'émission à plasma de façon à en déduire la valeur du Kd.

Ensuite, on lave avec de l'eau distillée, le gel de silice Si2323TrP ayant fixé l'uranium, on le remet dans une fiole et on ajoute 5 ml d'une solution d'acide nitrique 1N. On agite pendant 3 minutes à température ambiante, puis la solution acide est filtrée et analysée de façon à déterminer le pourcentage d'uranium élué dans cette solution acide.

Le mode opératoire ci-dessus décrit est par ailleurs réalisé en parallèle avec des solutions d'acide nitrique 1,5N, 2,0N, 2,5N, 3,0N et 5,0N. Les résultats obtenus sont illustrés en figure 4. On constate qu'une normalité d'acide nitrique supérieure à 2 est suffisante pour obtenir une élution d'au moins 90% de l'uranium.

Le mode opératoire ci-dessus décrit est réalisé en parallèle avec des solutions d'acide nitrique 2,0N et en faisant varier le temps de contact entre le gel de silice ayant fixé l'uranium et la solution d'acide nitrique, entre 10 et 480 s. Les résultats obtenus sont illustrés en figure 5. On constate qu'un temps de contact voisin d'une minute est suffisant pour éluer l'uranium.

**b) Essai de fixation de l'uranium $^{238}$ par du gel de silice Si2323TrP et d'élution de ce dernier au moyen d'une solution d'acide nitrique**

On pèse exactement 1 g de gel de silice Si2323TrP, que l'on place dans une fiole et on ajoute 50 ml d'une solution synthétique (A) de nitrate d'uranyle d'une teneur proche de 2 g/l et ajustée à un pH de 4,82. La solution est agitée pendant 5 minutes à température ambiante (23°C), puis on abandonne le mélange sans agitation pendant un temps de contact de 1 heure 30. Ensuite, la solution est filtrée de façon à la séparer du gel. Le filtrat est analysé par spectrométrie d'émission à plasma de façon à en déduire la valeur du Kd.

Ensuite, on lave le gel de silice Si2323TrP à l'eau distillée, on le remet dans une fiole et on ajoute 20 ml d'une solution d'acide nitrique 2N et on agite l'ensemble pendant 15 minutes à température ambiante. La solution acide est filtrée puis analysée par spectrométrie d'émission à plasma pour déduire le Kd. Le gel est isolé, lavé et séché puis cet échantillon est placé dans une fiole contenant 15 ml de solution synthétique (A) pour subir 9 traitements identiques

au précédent.

Les résultats obtenus après 10 cycles d'extraction et après 10 cycles d'élution sont illustrés respectivement sur les figures 6 et 7.

On constate que l'on régénère presque totalement le gel de silice Si2323TrP et que sa capacité d'extraction reste quasiment inchangée même après 10 cycles de mise en service, ce qui est favorable à une mise en oeuvre industrielle. On notera que le mauvais résultat du 2ème cycle d'extraction en figure 6 est dû à une régénération incomplète du matériau.

**Exemple 13 : Essai de fixation d'un métal en mode dynamique**

Des essais ont également été effectués au cours d'un procédé dynamique consistant à placer du Si2323TrP dans une colonne et à faire percoler, l'effluent à traiter.

**Dispositif expérimental :**

Dans tous les essais suivants, on utilise une colonne en verre d'un diamètre de 1,5 cm et d'une hauteur de 30 cm, renfermant 30 g de gel de silice Si2323TrP disposé entre un fritté et du polytétrafluoroéthylène (Téflon, marque déposée). L'alimentation de la colonne peut se faire indifféremment par le haut ou par le bas, par l'intermédiaire de tuyaux calibrés. Lors du procédé de décontamination, l'alimentation en effluent contaminé $\alpha$ se fait par la base de la colonne, à une vitesse d'environ $2,8.10^{-2}$cm/s, (environ 180 ml/h), ce qui correspond à un temps de séjour de l'effluent à traiter d'environ 18 minutes.

**- a) Essai de fixation de l'uranium 238 présent dans un effluent réel provenant d'une tour d'évaporation industrielle**

Dans cet essai, on traite 15 litres d'un effluent contenant comme élément radioactif uniquement de l'uranium 238 à une concentration de 0,6 µg/l.

On fait passer cet effluent à travers la colonne de gel de silice Si2323TrP précitée. L'effluent initial et l'effluent obtenu après passage sur le Si2323TrP sont analysés par spectrométrie de masse à plasma (I.C.P.M.S.). La concentration finale en uranium 238 de l'effluent après passage sur le gel de silice est 0,02 µg/l, ce qui permet de constater que quasiment tout l'uranium présent dans l'effluent initial a été absorbé sur le gel de silice Si2323TrP après un seul passage sur la colonne. (Le matériau Si2323TrP a retenu au minimum 96,7% environ de l'uranium initial présent). Cet effluent a donc été totalement épuré de l'élément émetteur $\alpha$. Les techniques de l'art antérieur ne permettent pas une telle épuration de l'uranium.

On notera que la limite de détection de cette technique lors de cet essai est de 0,02 µg/l.

**- b) Essai de fixation de l'uranium 238 présent dans une solution synthétique de nitrate d'uranyle**

Dans les deux cas suivants, on traite 2 l d'une solution contenant de l'uranium 238. L'effluent initial et l'effluent traité, obtenu après passage sur le gel de silice Si2323TrP ont été dosés par spectrométrie de masse à plasma (I.C. P.M.S.). Les résultats obtenus sont illustrés ci-dessous dans le tableau 3.

Tableau 3

| | | |
|---|---|---|
| Effluent à traiter ($U^{238}$) | 180 µg/l | 1306 µg/l |
| Effluent traité ($U^{238}$) | ≤0,02 µg/l | ≤0,02 µg/l |
| Pourcentage d'uranium 238 fixé par le gel de silice Si2323TrP | 99,9 % | 99,9 % |

La limite de détection de cette technique lors de cet essai est de 0,02 µg/l.

**- c) Essai de fixation de l'uranium, du cérium et de l'europium présents dans une solution synthétique**

Dans cet essai, on traite 1,4 litre d'une solution contenant 53 mg/l d'uranium, 45 mg/l de cérium et 17 mg/l d'europium sur la colonne de gel de silice Si2323TrP décrite dans le dispositif expérimental. On effectue des prélèvements réguliers à la sortie de la colonne et, ces solutions ainsi que la solution initiale sont analysées par spectrométrie d'émission à plasma. L'évolution de la concentration des différents cations à la sortie de la.colonne en fonction du volume de solution initiale écoulée est représentée en figure 8. On constate qu'un premier cation ($Ce^{3+}$) est détecté

après qu'environ 200 ml de solution se soient écoulés, ce qui correspond à environ 30 mg de cations (uranium, cérium et europium) fixés pour 30 g de silice Si2323TrP contenus dans la colonne avant que celle-ci ne soit saturée et qu'un élément cationique à éliminer ne soit plus fixé.

Les trois types de cations ont ensuite été élués par une solution d'acide nitrique 2N et les résultats obtenus dans le cas de l'élution de l'uranium sont représentés sur les figures 9 et 10. Sur la figure 9, on constate qu'un régime permanent s'établit d'abord (partie gauche de la courbe) puis on observe une décroissance continue de la teneur en uranium dans le gel de silice Si2323TrP (partie droite de la courbe) au fur et à mesure de l'augmentation du volume d'acide nitrique introduit dans la colonne.

**- d) Essai de fixation du plutonium 239 et de l'américium 241 présents dans un effluent réel provenant d'une tour d'évaporation industrielle**

Dans cet essai, on traite 15 l d'un effluent contenant 62 Bq/$m^3$ de plutonium 239 et 213 Bq/$m^3$ d'américium 241. Les effluents avant et après passage sur la colonne de gel de silice Si2323TrP sont analysés par comptage $\alpha$. L'effluent obtenu contient au plus 2 Bq/$m^3$ de plutonium et 2 Bq/$m^3$ d'américium ce qui correspond à la limite de détection. Le gel de silice retient donc au moins respectivement 96,8% du plutonium et 99,1% d'américium.

On constate que la quasi-totalité des actinides présents dans l'effluent avant le traitement a été fixée sur le gel de silice Si2323TrP et que l'effluent, après le passage sur la colonne, est totalement épuré en éléments émetteurs $\alpha$ dans les limites de détection actuelles.

**- e) Analyse de divers cations présents dans les effluents avant et après le passage sur une colonne de gel de silice, de Si2323 ou de Si2323TrP**

Une analyse quantitative et qualitative des cations présents en solution avant et après le passage sur une colonne remplie de gel de silice, de Si2323 ou de Si2323TrP a été effectuée afin de déterminer les différents éléments susceptibles d'être retenus par la colonne. Les cations testés étaient les suivants : Na, Mg, Ca, Sr, Ba, Si, Al, Ga, Pb, Hg, Ti, Cr, Mn, Fe, Ni, Cu, Zn, Cd, Ta et Au.

Les résultats obtenus sont illustrés sur le tableau 4 ci-après.

**Tableau 4**

| Eléments | Na | Mg | Ca | Sr | Ba |
|---|---|---|---|---|---|
| Teneur du cation dans la solution mère (mg/l) | 400 | 2 | 71 | 0,06 | 0,7 |
| Teneur du cation dans la solution éluée (mg/l) après passage sur : | | | | | |
| - gel de silice | 395 | 1,8 | 73 | 0,06 | 0,6 |
| - Si2323 | 402 | 1,82 | 77 | 0,06 | 0,62 |
| - Si2323TrP | 397 | 1,76 | 71 | 0,06 | 0,6 |

| Eléments | Si | Al | Ga | Pb | Hg |
|---|---|---|---|---|---|
| Teneur du cation dans la solution mère (mg/l) | 13 | 1,12 | 0,02 | 0,17 | 0,03 |
| Teneur du cation dans la solution éluée (mg/l) après passage sur : | | | | | |
| - gel de silice | 47 | 1,09 | 0,02 | 0,15 | 0,03 |
| - Si2323 | 36 | 1,09 | 0,02 | 0,15 | < LD |
| - Si2323TrP | 32 | 1,12 | 0,02 | 0,15 | < LD |

| Eléments | Ti | Cr | Mn | Fe | Ni |
|---|---|---|---|---|---|
| Teneur du cation dans la solution mère (mg/l) | 0,36 | 0,05 | 0,04 | 4,6 | 0,06 |
| Teneur du cation dans la solution éluée (mg/l) après passage sur : | | | | | |
| - gel de silice | 0,34 | 0,03 | 0,04 | 4,07 | 0,06 |
| - Si2323 | 0,26 | 0,03 | 0,04 | 2,89 | 0,06 |
| - Si2323TrP | 0,27 | 0,03 | 0,05 | 2,82 | 0,06 |

| Eléments | Cu | Zn | Cd | Ta | Au |
|---|---|---|---|---|---|
| Teneur du cation dans la solution mère (mg/l) | 1,16 | 4,1 | 0,08 | 1,8 | 0,03 |
| Teneur du cation dans la solution éluée (mg/l) après passage sur : | | | | | |
| - gel de silice | 1,02 | 3,65 | 0,06 | 0,03 | < LD |
| - Si2323 | 0,67 | 3,6 | 0,06 | < LD | < LD |
| - Si2323TrP | 0,03 | 3,6 | < LD | < LD | < LD |

L.D. : limite de détection proche de 0,03 mg/l.

On constate que seuls certains éléments comme le cuivre, le cadmium, le mercure, le tantale et l'or sont piégés sur la colonne. Par contre, les éléments alcalins et alcalino-terreux, toujours présents dans les effluents (et notamment le sodium), ne sont pratiquement pas piégés. Ceci permet d'éviter que la colonne ne soit trop rapidement saturée et perde son efficacité.

**Exemple 14 : Essais de fixation de métaux sur une installation semi-pilote**

**Dispositif expérimental**

Ce dispositif est identique à celui précédemment décrit dans l'exemple 13, si ce n'est que la colonne présente un diamètre de 4,5 cm et une hauteur de 105 cm, qu'elle renferme 1800 g de gel de silice Si2323TrP et que le débit de l'effluent est d'environ 10 l/h.

**Essai de fixation de plutonium, d'américium et d'uranium présents dans un effluent réel provenant d'une tour d'évaporation industrielle**

Dans cet essai, 2 échantillons de 1 $m^3$ d'effluent ont été traités dans le dispositif expérimental ci-dessus mentionné. Les résultats obtenus sont illustrés dans le tableau 6 ci-dessous.

Tableau 6

| Métaux | Plutonium (Bq/$m^3$) | | Américium (Bq/$m^3$) | | Uranium (µg/$m^3$) | |
|---|---|---|---|---|---|---|
| Nature de l'effluent | Effluent à traiter | Effluent traité | Effluent à traiter | Effluent traité | Effluent à traiter | Effluent traité |
| 1er échantillon | 20 | <5 | 10 | <5 | 208 | <0,1 |
| 2ème échantillon | 28 | <5 | 210 | <5 | 0,4 | <0,1 |

Une fois encore, on constate que le gel de silice modifié utilisé a fixé une grande partie des métaux présents.

**Exemple 15 : Essai sur des effluents alcalins fortement chargés en plutonium et en américium**

Dans cet essai, on traite 1/2 litre d'une solution fortement chargée contenant 19840 kBq/$m^3$ de plutonium 239 et 750 kBq/$m^3$ d'américium 241. L'effluent initial et l'effluent obtenu après passage sur une colonne contenant Si2323TrP sont analysés par comptage $\underline{\alpha}$. L'effluent traité présente une concentration de 376 kBq/$m^3$ de plutonium 239 et de 24 kBq/$m^3$ d'américium 241. Le facteur d'appauvrissement est de 53 pour le plutonium et de 31 pour l'américium.

En outre, une analyse qualitative et quantitative des cations présents dans l'effluent initial et dans l'effluent obtenu après traitement sur un gel de silice et sur le matériau Si2323TrP a été réalisée. L'analyse a été effectuée par torche à plasma. Les résultats sont illustrés dans le tableau 5.

Dans cette expérience, compte-tenu de l'utilisation d'une solution très fortement chargée en plutonium et en américium, ladite solution devrait être traitée sur une colonne remplie uniquement de gel de silice ne contenant pas de polyazacycloalcane greffé, avant d'être traitée sur Si2323TrP.

D'une manière générale, tout procédé utilisant l'un des polyazacycloalcanes précédemment décrits pour l'élimination de cations métalliques peut être précédé par un procédé de traitement sur gel de silice simple. Dans ce cas, l'effluent à traiter est passé sur un gel de silice dont la granulométrie est comprise entre 35 et 70 mesh.

L'effluent traité présente un pH supérieur ou égal à 3 et de préférence supérieur ou égal à 4,5. Le temps de contact entre l'effluent et le gel de silice est d'au moins 1 minute ou mieux compris entre 1 et 30 minutes environ. Les éléments polluants sont réextraits du gel de silice par une solution d'acide nitrique 1 à 5N.

Tableau 5

| Cations | Teneur en cations dans l'effluent à traiter (mg/l) | Teneur en cations dans l'effluent traité après passage sur gel de silice (mg/l) | Teneur en cations dans l'effluent traité après passage sur Si2323TrP (mg/l) |
|---|---|---|---|
| Na | ≈ 50000 | ≈ 50000 | ≈ 50000 |
| Mg | 1 | 1 | 1 |
| Ca | 2 | 2 | 2 |
| Al | 1 | 1 | 1 |

Tableau 5 (suite)

| Cations | Teneur en cations dans l'effluent à traiter (mg/l) | Teneur en cations dans l'effluent traité après passage sur gel de silice (mg/l) | Teneur en cations dans l'effluent traité après passage sur Si2323TrP (mg/l) |
|---|---|---|---|
| Si | 20 | 36 | 20 |
| Mn | 3 | 3 | 3 |
| Fe | 380 | 290 | 350 |
| Cd | 17 | 17 | 11 |

Ceci montre la bonne sélectivité du gel de silice et du gel de silice modifié qui ne retiennent pas les cations précités.

**Exemple 16 : Essai de fixation d'$O_2$ sur un complexe tétraazamacrocyclique de cobalt II**

**Mode opératoire**

Le montage utilisé est illustré en figure 11. Il comprend un ballon 1 thermostaté 3 contenant la solution 5 de réactifs. Ce ballon est placé sur un dispositif d'agitation magnétique 7. Le ballon est également muni d'un pH mètre 9 et de moyens d'ajustement du pH 11. Ce ballon 1 est relié à un capteur de pression 13 muni d'un enregistreur 15. Le capteur de pression comprend un index de mesure 17 se déplaçant en translation dans un tube.

Le complexe utilisé présente la formule (V) précitée où $R_1$ est la silice, $R_2$ est l'hydrogène, M est le cobalt II et n et p sont égaux à 2 et m et q égaux à 3 ou l'inverse.

On met en suspension dans le ballon thermostaté 1, 0,500 g de gel de silice modifié dans 16 $cm^3$ d'eau distillée et 2 $cm^3$ de KCl à 1 mol/l. Un équivalent de $CoCl_2$, $6H_2O$ en solution dans 2 $cm^3$ d'eau distillée est introduit dans le ballon.

Le système est ensuite isolé et à t=0, on ajoute la solution de sel de cobalt dans la suspension. Les réactions de complexation puis d'oxygénation se produisent conjointement entraînant une consommation en dioxygène et le déplacement de l'index de mercure de manière à rétablir la pression atmosphérique à l'intérieur du système. A intervalles de temps (t) réguliers, on relève la position de l'index de mercure. Après étalonnage par une seringue à gaz de 1 $cm^3$, on détermine la quantité de dioxygène fixé ($n_{O2}$) par mole de complexe ($n_c$), à t donné. Les résultats obtenus sur le gel de silice modifié par les deux-voies de greffage (correspondant respectivement au procédé de fabrication d'un polyazacycloalcane greffé sur un gel de silice selon le premier ou le deuxième mode de réalisation précédemment décrit) sont reproduits dans le tableau 6 ci-dessous.

**Tableau 6**

| | Polyazacycloalcane selon le 1er mode de réalisation | Polyazacycloalcane selon le 2ème mode de réalisation |
|---|---|---|
| méq de complexe/g ($n_c$) | 0,41 | 0,36 |
| nombre de moles de $O_2$ fixé/g ($n_{O2}$) | $6,18.10^{-5}$ | $7,68.10^{-5}$ |
| % $n_{O2}/n_c$ (hypothèse complexe 100% superoxo) | 15 | 21 |

Le spectre de résonance paramagnétique électronique des complexes oxygénés enregistrés en matrice solide à 100 K est caractéristique d'espèces oxygénées de type superoxo. Pour le calcul du rapport $n_{O2}/n_c$, on a fait l'hypothèse que le complexe oxygéné était totalement sous forme superoxo.

## Revendications

1. Polyazacycloalcanes, **caractérisés en ce qu'**ils répondent à l'une des trois formules (I), (II), (III) ci-dessous :

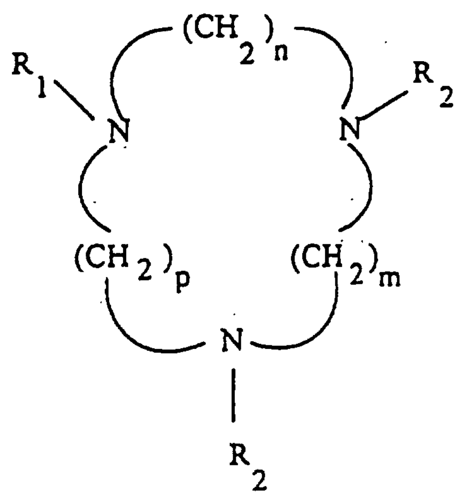

(I)

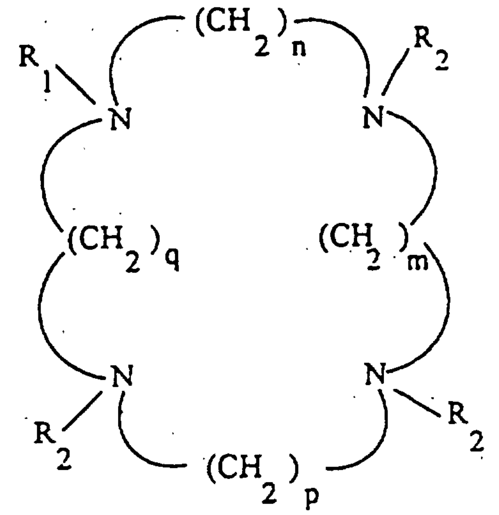

(II)

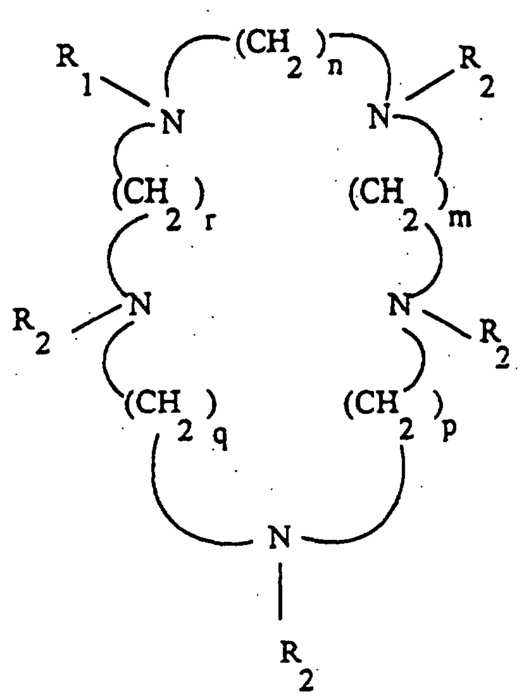

(III)

dans lesquelles n, m, p, q, r qui peuvent être identiques ou différents sont égaux à 2 ou 3,
$R_1$ est un support solide,
$R_2$ représente le groupe $(CH_2)_2$-$R_3$, $R_3$ étant un groupement fonctionnel choisi dans le groupe constitué par COOH, $CONH_2$, $CH_2OH$, CN ou $COOR_4$, $R_4$ représentant un groupe alkyle ou benzyle, ou $R_2$ représente le groupe -$(CH_2)$-$R_5$, $R_5$ représentant COOH ou $PO_3R_6$, $R_6$ représentant l'hydrogène ou un groupe alkyle,

2. Polyazacycloalcanes selon la revendication 1, **caractérisés en ce que** le support solide est un polymère organique réticulé ou non.

3. Polyazacycloalcanes selon la revendication 2, **caractérisés en ce que** le support solide est un reste d'un polymère organique réticulé ou non à terminaison halogénure d'alkyle, de préférence à terminaison chlorure d'alkyle.

4. Polyazacycloalcanes selon la revendication 3, **caractérisés en ce que** le support solide est un reste d'un polystyrène chloro-méthylé.

5. Polyazacycloalcanes selon la revendication 4, **caractérisés en ce que** la granulométrie dudit polystyrène chloro-méthylé est comprise entre 20 et 400 mesh et de préférence entre 20 et 70 mesh.

6. Polyazacycloalcanes selon la revendication 1, **caractérisés en ce que** $R_1$ est un support solide dérivé de la silice répondant à la formule :

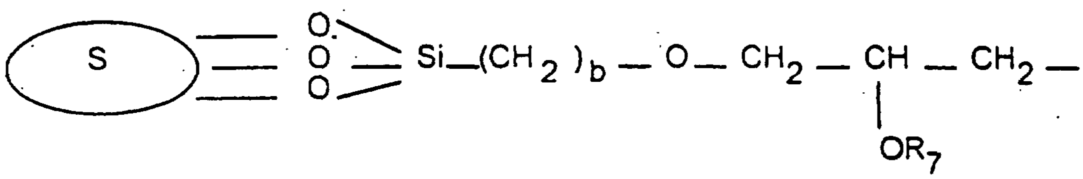

ou à la formule :

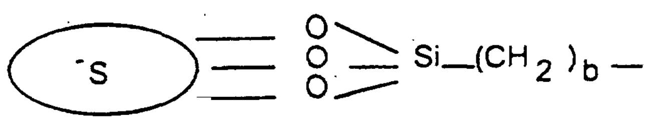

S représentant un gel de silice, b étant compris entre 1 et 4 et de préférence égal à 3 et $R_7$ étant un groupe alkyle ou un atome d'hydrogène.

7. Polyazacycloalcanes selon la revendication 6, **caractérisés en ce que** la granulométrie du support solide dérivé de la silice est comprise entre 20 et 400 mesh et de préférence entre 20 et 70 mesh.

8. Complexes tri-, tétra- ou penta-azomacrocycliques de métaux de transition répondant à l'une des formules (IV), (V) ou (VI) suivantes :

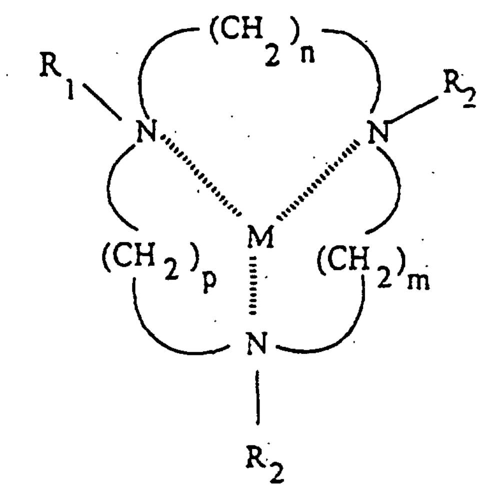

(IV)

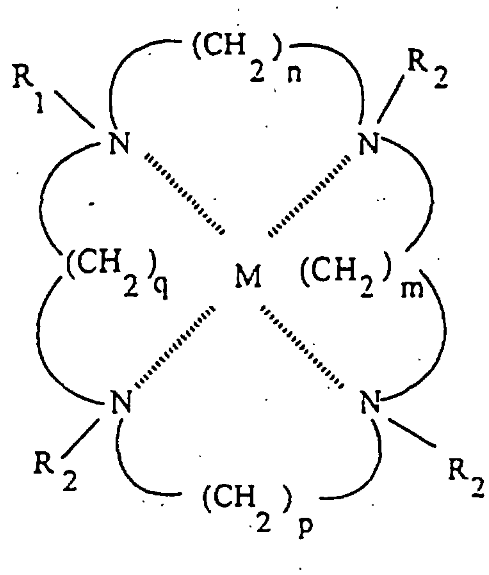

(V)

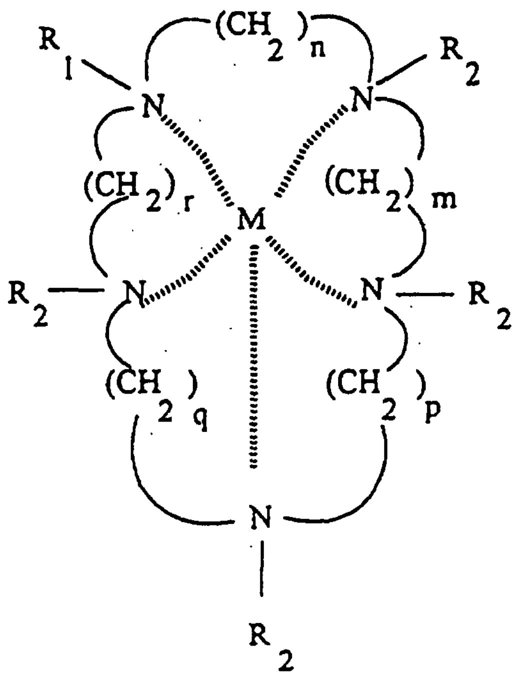

(VI)

dans lesquelles n, m, p, q, r qui peuvent être identiques ou différents sont égaux à 2 ou 3, M est un métal de transition choisi parmi Ti, Mn, Fe, Co, Ni, Cu, Ru, Rh et Ir, $R_1$ est un support solide et $R_2$ représente le groupe $(CH_2)_2$-$R_3$, $R_3$ étant un groupement fonctionnel choisi dans le groupe constitué par COOH, $CONH_2$, $CH_2OH$, CN ou $COOR_4$, $R_4$ représentant un groupe alkyle ou benzyle ou $R_2$ représente $(CH_2)_2$-$R_5$, $R_5$ représentant COOH ou $PO_3R_6$, $R_6$ représentant l'hydrogène ou un groupe alkyle.

**9.** Complexes tri-, tétra- ou penta-azamacrocycliques selon la revendication 8, **caractérisés en ce que** $R_1$ est un support solide du type polymère organique réticulé ou non, de préférence un reste d'un tel polymère à terminaison halogénure d'alkyle ou un dérivé de silice répondant à la formule :

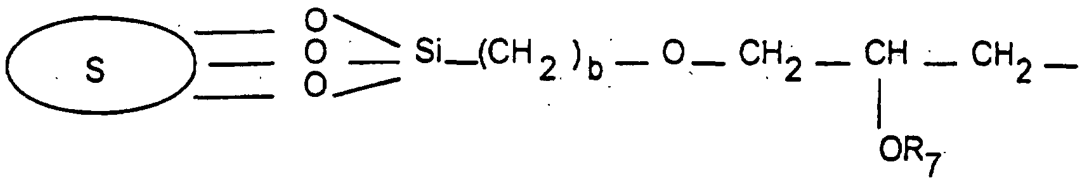

ou à la formule :

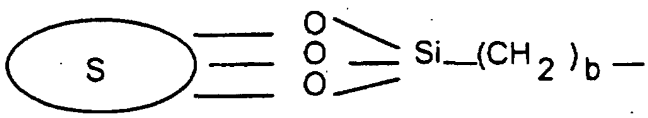

S représentant un gel de silice, b étant compris entre 1 et 4 et de préférence égal à 3 et $R_7$ étant un groupe alkyle ou un atome d'hydrogène.

**10.** Procédé de fabrication d'un polyazacycloalcane substitué, greffé sur un support solide, **caractérisé en ce qu'**il consite à faire réagir un excés de $CH_2$=CH-$R_3$, $R_3$ étant un groupement fonctionnel choisi parmi COOH, $CONH_2$, $CH_2$-OH, CN ou $COOR_4$, $R_4$ étant un groupe alkyle ou benzyle, avec un polyazacycloalcane greffé sur un support solide $R_1$, correspondant à l'une des formules (VII), (VIII), (IX) suivantes:

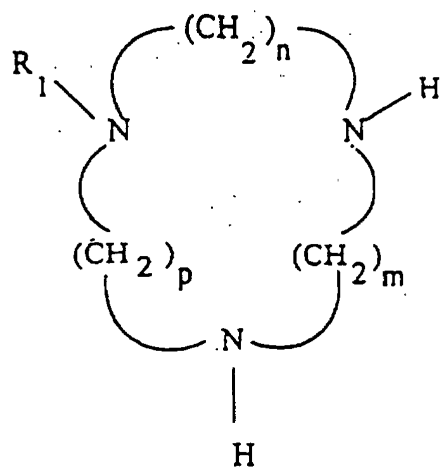

(VII)

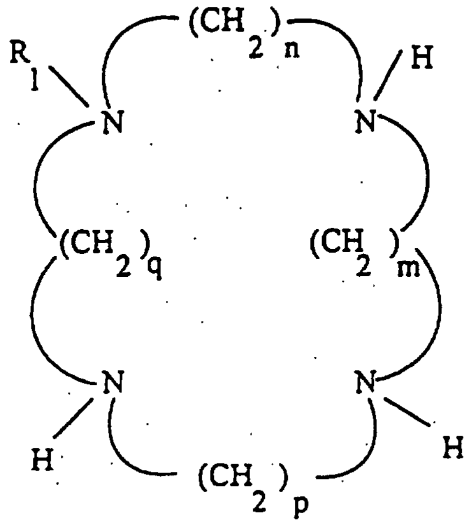

(VIII)

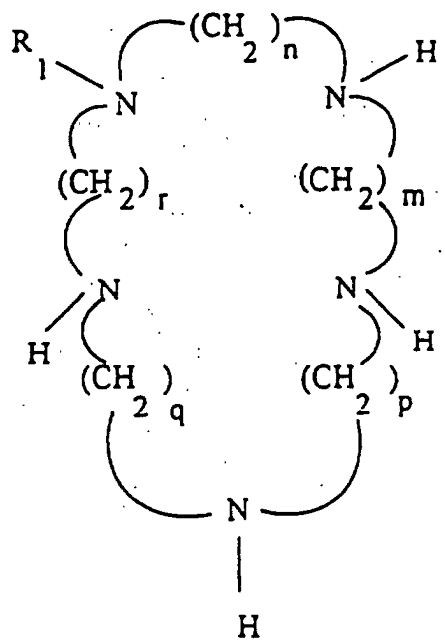

(IX)

dans lesquelles n, m, p, q, r qui peuvent être identiques ou différents sont égaux à 2 ou 3, et $R_1$ est un support solide sur lequel est greffé l'atome d'azote et est choisi parmi un polymère organique réticulé ou non, de préférence un reste d'un tel polymère à terminaison halogénure d'alkyle ou un dérivé de silice répondant à la formule :

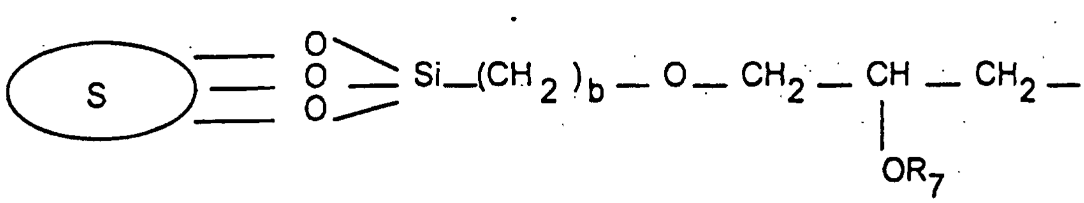

ou à la formule :

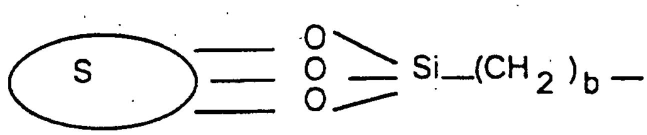

S représentant un gel de silice, b étant compris entre 1 et 4 et de préférence égal à 3 et $R_7$ étant un groupe alkyle ou un atome d'hydrogène,
de façon à obtenir un polyazacycloalcane greffé sur un support solide et substitué, présentant respectivement l'une des formules (X), (XI) ou (XII) suivantes :

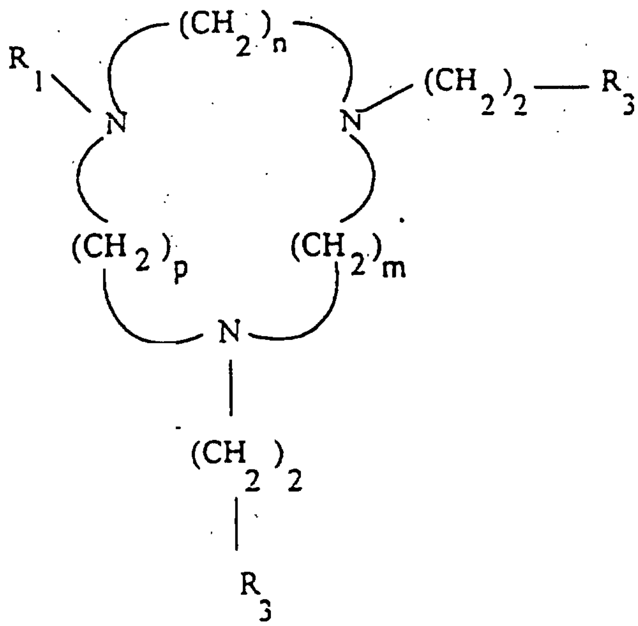

(X)

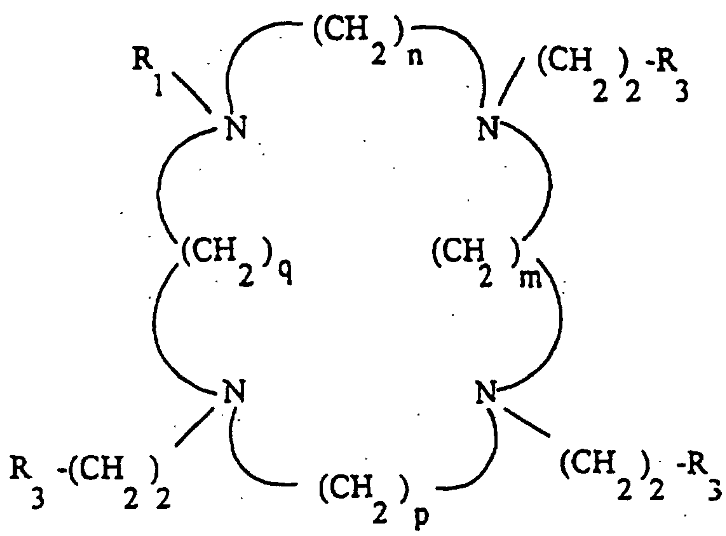

(XI)

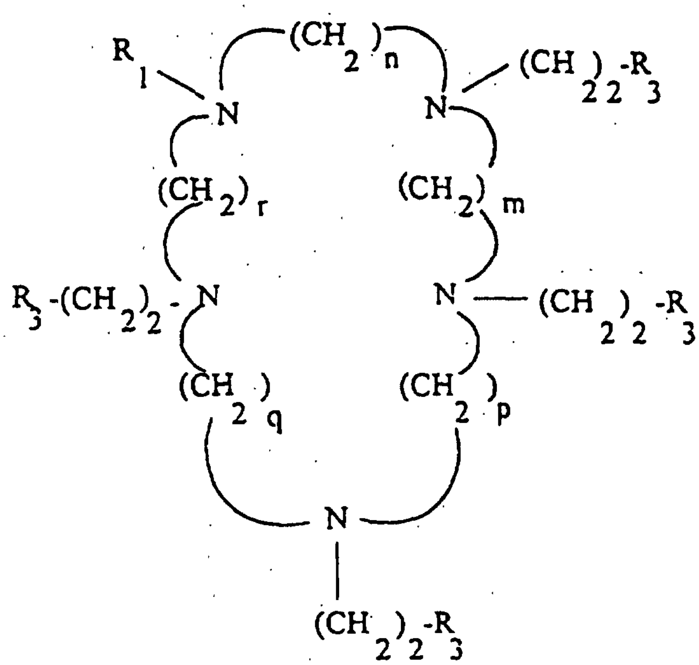

(XII)

dans lesquelles n, m, p, q, r, $R_1$ et $R_3$ ont la même signification que précédemment.

**11.** Procédé de fabrication, selon la revendication 10, **caractérisé en ce que** $R_1$ est un reste d'un polystyrène chlorométhylé.

**12.** Utilisation du polyazacycloalcane greffé, substitué selon l'une quelconque des revendications 1 à 7, pour l'élimination de cations métalliques d'un liquide.

**13.** Utilisation du polyazacycloalcane greffé, substitué selon l'une quelconque des revendications 1 à 7, pour l'élimination du cuivre ou de l'aluminium d'un fluide, en particulier un fluide biologique.

**14.** Utilisation du polyazacycloalcane greffé obtenu par le procédé selon la revendication 10, ou 11 pour l'élimination de cations métalliques dans un liquide.

**15.** Utilisation du polyazacycloalcane greffé selon la revendication 12 ou 14, **caractérisée en ce que** les cations métalliques sont des cations de métaux de transition, de métaux lourds, de métaux du groupe IIIa, des lanthanides ou des actinides.

**16.** Utilisation du polyazacycloalcane greffé, selon la revendication 15, **caractérisée en ce que** les cations métalliques sont choisis parmi U, Pu, Am, Ce, Eu, Al, Gd, Cr, Mn, Fe, Co, Ni, Cu, Zn, Ag, Cd, Sn, Au, Hg ou Pb.

**17.** Utilisation du polyazacycloalcane greffé selon la revendication 12 ou 14, **caractérisé en ce que** le liquide est prétraité par un passage sur gel de silice.

**Patentansprüche**

**1.** Polyazacycloalkane, die einer der drei folgenden Formeln (I), (II), (III) entsprechen:

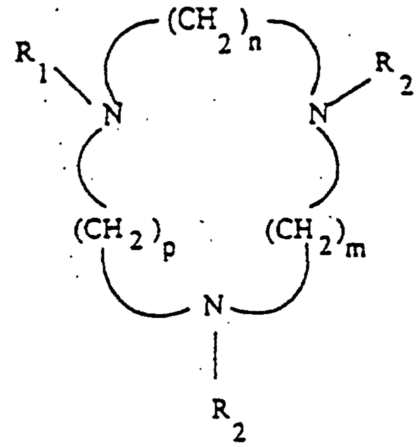

(I)

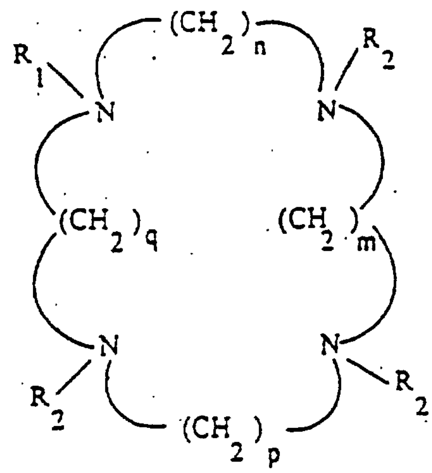

(II)

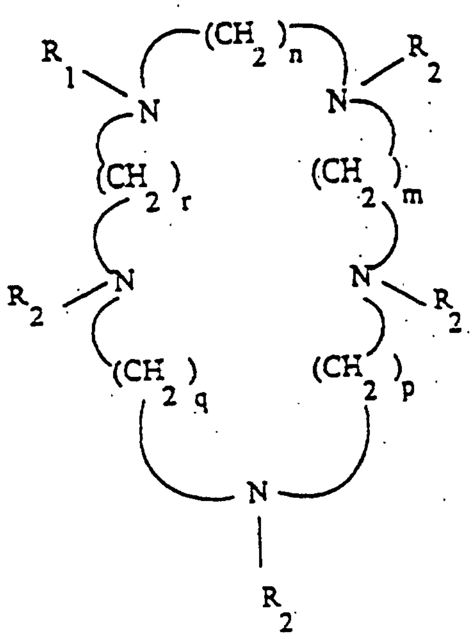

(III)

worin n, m, p, q, r, die gleich oder verschieden sein können, gleich 2 oder drei sind,
$R_1$ ein fester Träger ist,
$R_2$ die Gruppe $(CH_2)_2$-$R_3$, wobei $R_3$ eine aus COOH, $CONH_2$, $CH_2OH$, CN oder $COOR_4$ mit $R_4$ gleich einer Alkyl- oder Benzylgruppe ausgewählte funktionelle Gruppe ist, bedeutet oder $R_2$ die Gruppe -$(CH_2)$-$R_5$, wobei $R_5$ für COOH oder $PO_3R_6$ mit $R_6$ gleich Wasserstoff oder einer Alkylgruppe steht, bedeutet.

2. Polyazacycloalkane gemäß Anspruch 1, **dadurch gekennzeichnet, dass** der feste Träger ein vernetztes oder nichtvernetztes organisches Polymer ist.

3. Polyazacycloalkane gemäß Anspruch 2, **dadurch gekennzeichnet, dass** der feste Träger ein Rest eines vernetzten oder nicht-vernetzten organischen Polymers mit Halogenalkylendgruppe, vorzugsweise Chloralkylendgruppe ist.

4. Polyazacycloalkane gemäß Anspruch 3, **dadurch gekennzeichnet, dass** der feste Träger ein Rest eines chlormethylierten Polystyrols ist.

5. Polyazacycloalkane gemäß Anspruch 4, **dadurch gekennzeichnet, dass** die Korngrößenklassierung des chlormethylierten Polystyrols zwischen 20 und 400 mesh und vorzugsweise zwischen 20 und 70 mesh liegt.

6. Polyazacycloalkane gemäß Anspruch 1, **dadurch gekennzeichnet, dass** $R_1$ ein fester Träger ist, der von dem Silicamaterial entsprechend der Formel:

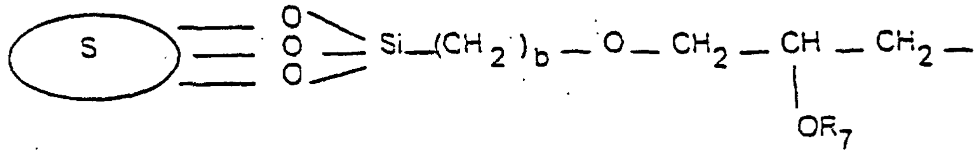

oder der Formel:

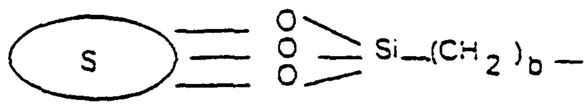

wobei S für ein Silicagel steht, b zwischen 1 und 4 liegt und vorzugsweise gleich 3 ist und $R_7$ eine Alkylgruppe oder ein Wasserstoffatom ist, abgeleitet ist.

7. Polyazacycloalkane gemäß Anspruch 6, **dadurch gekennzeichnet, dass** die Korngrößenklassierung des von dem Silicamaterial abgeleiteten festen Trägers zwischen 20 und 400 mesh und vorzugsweise zwischen 20 und 70 mesh liegt.

8. Tri-, Tetra- oder Pentaazomakrocycluskomplexe von Übergangsmetallen gemäß einer der folgenden Formeln (IV), (V) oder (VI):

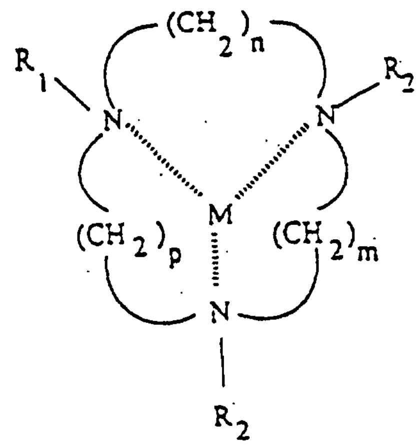

(IV)

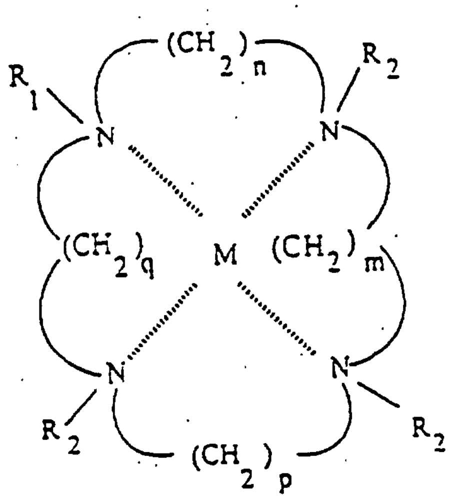

(V)

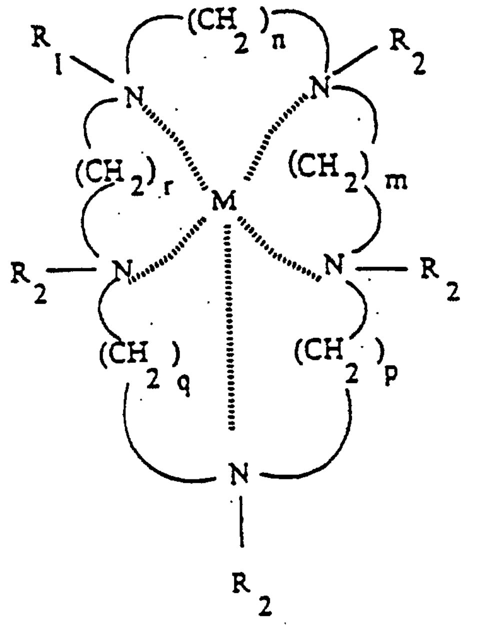

(VI)

worin n, m, p, q, r, die gleich oder verschieden sein können, gleich 2 oder drei sind, M ein aus Ti, Mn, Fe, Co, Ni, Cu, Ru, Rh und Ir ausgewähltes Übergangsmetall ist, $R_1$ ein fester Träger ist, und $R_2$ die Gruppe $(CH_2)_2$-$R_3$, wobei $R_3$ eine aus COOH, $CONH_2$, $CH_2OH$, CN oder $COOR_4$ mit $R_4$ gleich einer Alkyl- oder Benzylgruppe ausgewählte funktionelle Gruppe ist, bedeutet oder $R_2$ die Gruppe -$(CH_2)_2$-$R_5$, wobei $R_5$ für COOH oder $PO_3R_6$ mit $R_6$ gleich Wasserstoff oder einer Alkylgruppe steht, bedeutet.

**9.** Tri-, Tetra- oder Pentaazamacrocycluskomplexe gemäß Anspruch 8, **dadurch gekennzeichnet, dass** $R_1$ ein fester Träger des Typs eines vernetzten oder nicht-vernetzten organischen Polymers, vorzugsweise ein Rest eines solchen Polymers mit Halogenalkylendgruppe oder ein Silicaderivat gemäß der Formel:

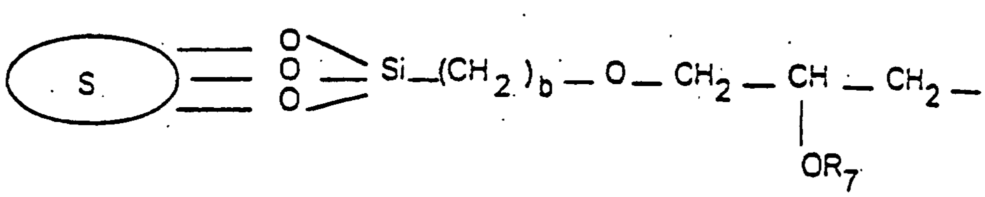

oder der Formel:

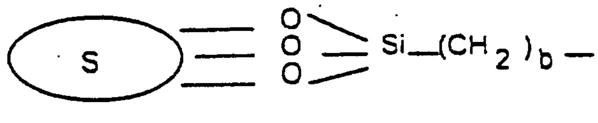

wobei S für ein Silicagel steht, b zwischen 1 und 4 liegt und vorzugsweise gleich 3 ist und $R_7$ eine Alkylgruppe oder ein Wasserstoffatom ist, ist.

**10.** Verfahren zur Herstellung eines substituierten Polyazacycloalkans, das auf einen festen Träger gepfropft ist, durch Reagierenlassen eines Überschusses von $CH_2$=CH-$R_3$, wobei $R_3$ eine aus COOH, $CONH_2$, $CH_2$-OH, CN oder $COOR_4$ mit $R_4$ gleich einer Alkyl- oder Benzylgruppe gewählte funktionelle Gruppe ist, mit einem auf einen festen

Träger $R_1$ gepfropften Polyazacycloalkan gemäß einer der folgenden Formeln (VII), (VIII), (IX):

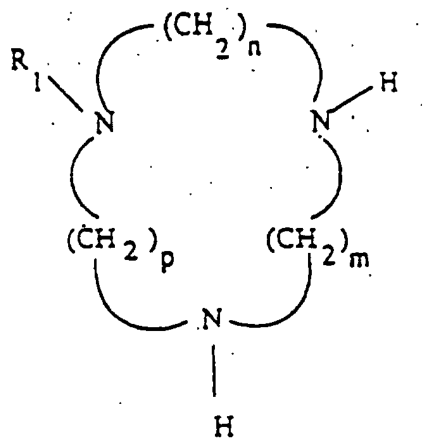

(VII)

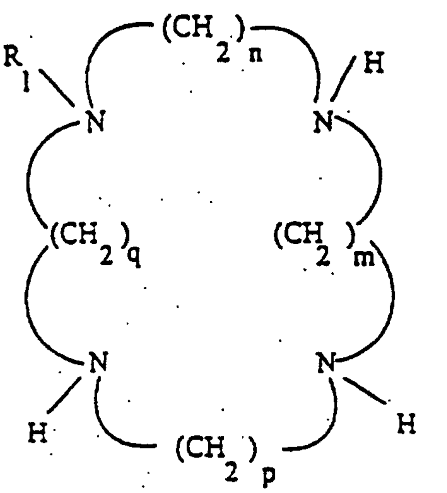

(VIII)

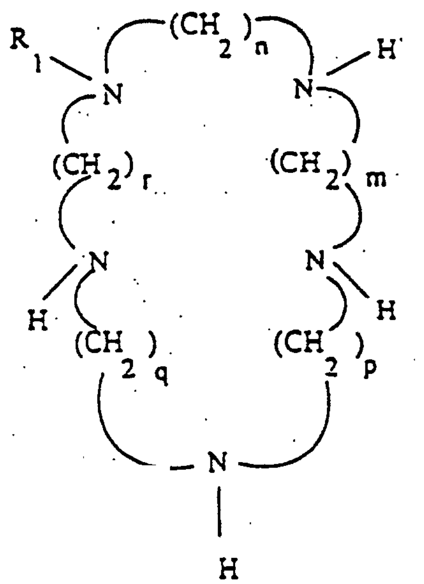

(IX)

worin n, m, p, q, r, die gleich oder verschieden sein können, gleich 2 oder 3 sind und $R_1$ ein fester Träger ist, an den das Stickstoffatom gebunden ist und der aus einem vernetzten oder nicht-vernetzten organischen Polymer, vorzugsweise einem Rest eines solchen Polymers mit Halogenalkylendgruppe oder einem Silicaderivat gemäß der Formel:

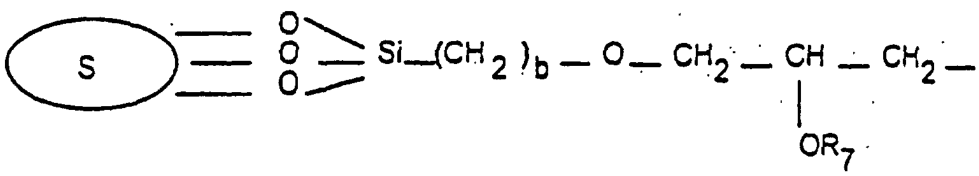

oder der Formel:

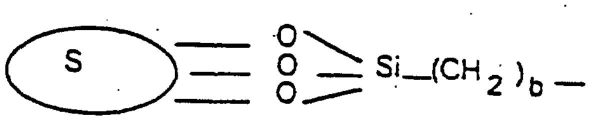

worin S für ein Silicagel steht, b zwischen 1 und 4 liegt und vorzugsweise gleich 3 ist und $R_7$ eine Alkylgruppe oder ein Wasserstoffatom ist, ausgewählt ist,
zur Bildung eines an einen festen Träger gebundenen bzw. gepfropften und substituierten Polyazacycloalkans, das jeweils einer der folgenden Formeln (X), (XI) oder (XII) genügt:

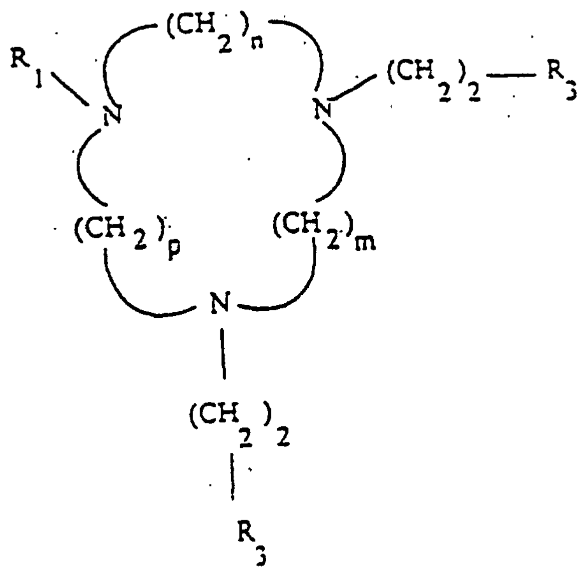

(X)

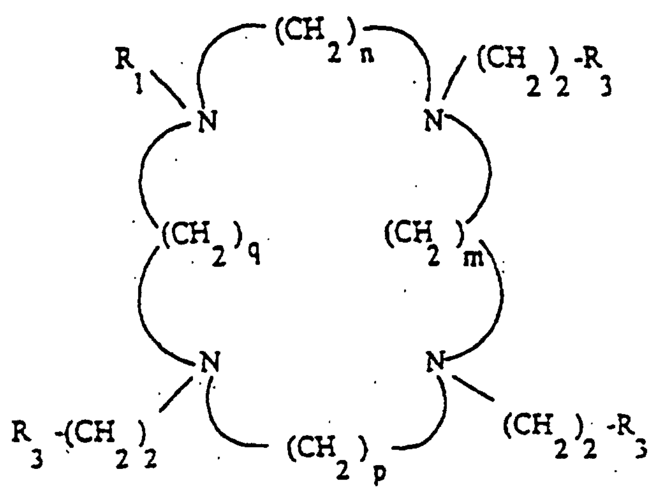

(XI)

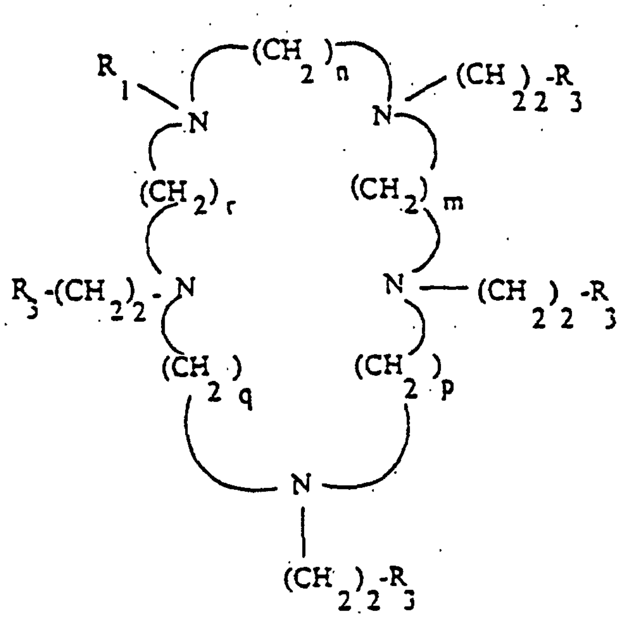

(XII)

worin n, m, p, q, r, $R_1$ und $R_3$ die im vorhergehenden angegebene Bedeutung besitzen.

**11.** Verfahren zur Herstellung gemäß Anspruch 10, wobei $R_1$ ein Rest eines chlormethylierten Polystyrols ist.

**12.** Verwendung des gepfropften Polyazacycloalkans, das gemäß einem der Ansprüche 1 bis 7 substituiert ist, zur Entfernung von Metallkationen aus einer Flüssigkeit.

**13.** Verwendung des gepfropften Polyazacycloalkans, das gemäß einem der Ansprüche 1 bis 7 substituiert ist, zur Entfernung von Kupfer oder Aluminium aus einem Fluidum, insbesondere einem biologischen Fluidum.

**14.** Verwendung des gepfropften Polyazacycloalkans, das durch das Verfahren gemäß Anspruch 10 oder 11 erhalten wurde, zur Entfernung von Metallkationen aus einer Flüssigkeit.

**15.** Verwendung des gepfropften Polyazacycloalkans gemäß Anspruch 12 oder 14, **dadurch gekennzeichnet, dass** die Metallkationen Kationen von Übergangsmetallen, Schwermetallen, Metallen der Gruppe IIIa, Lanthaniden oder Aktiniden sind.

**16.** Verwendung des gepfropften Polyazacycloalkans gemäß Anspruch 15, **dadurch gekennzeichnet, dass** die Metallkationen aus U, Pu, Am, Ce, Eu, Al, Gd, Cr, Mn, Fe, Co, Ni, Cu, Zn, Ag, Cd, Sn, Au, Hg oder Pb ausgewählt sind.

**17.** Verwendung des gepfropften Polyazacycloalkans gemäß Anspruch 12 oder 14, **dadurch gekennzeichnet, dass** die Flüssigkeit durch ein Passieren von Silicagel vorbehandelt wird.

**Claims**

**1.** Polyazacycloalkanes, **characterized in that** they comply with one of the three following formulas (I), (II) or (III):

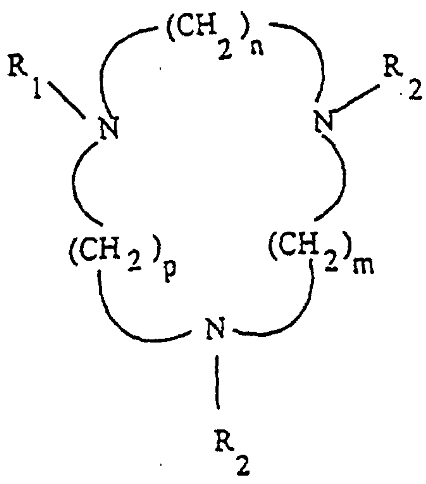

(I)

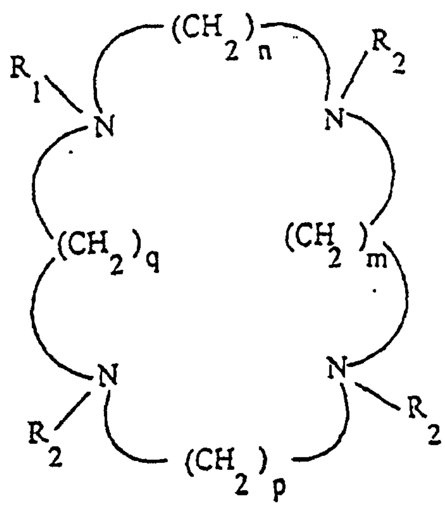

(II)

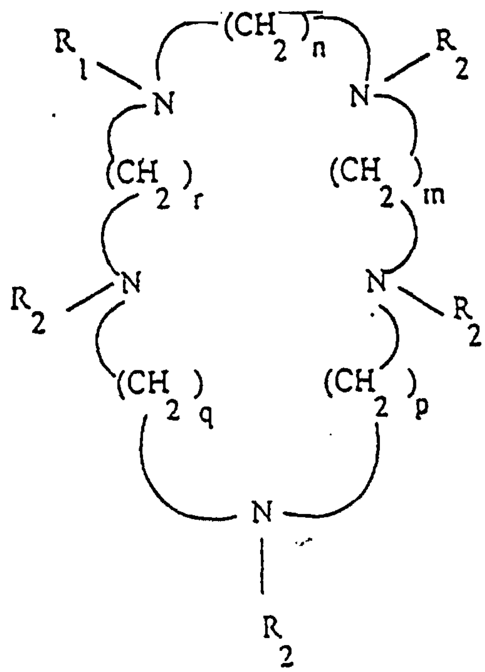

(III)

in which n, m, p, q and r, which can be the same or different, are equal to 2 or 3, $R_1$ is a solid support, $R_2$ represents the group $(CH_2)_2$-$R_3$, $R_3$ being a functional group chosen from within the group constituted by COOH, $CONH_2$, $CH_2OH$, CN or $COOR_4$, $R_4$, representing an alkyl or benzyl group, or $R_2$ represents the group -$(CH_2)$-$R_5$, $R_5$ representing COOH or $PO_3R_6$, $R_6$ representing an alkyl or hydrogen group.

2. Polyazacycloalkanes according to claim 1, **characterized in that** the solid support is a crosslinked or non-crosslinked, organic polymer.

3. Polyazacycloalkanes according to claim 2, chacacterized in that the solid support is a radical of a crosslinked or non-crosslinked, organic polymer with an alkyl halide and preferably alkyl chloride termination.

4. Polyazacycloalkanes according to claim 3, **characterized in that** the solid support is a radical of a chloromethylated polystyrene.

5. Polyazacycloalkanes according to claim 4, **characterized in that** the grain size of said chloromethylated polystyrene is between 20 and 400 mesh and preferably between 20 and 70 mesh.

6. Polyazacycloalkanes according to claim 1, **characterized in that** $R_1$ is a solid support derived from silica corresponding to the formula:

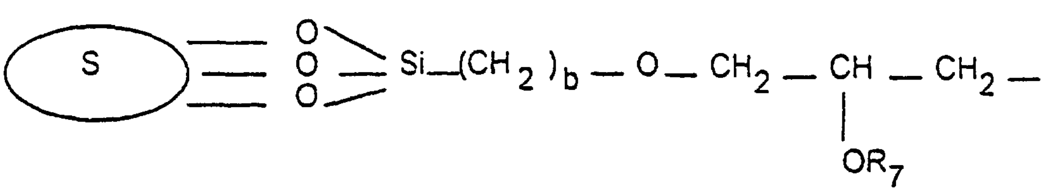

or the formula:

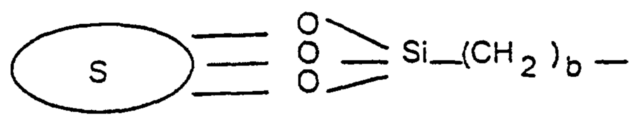

S representing a silica gel, b being between 1 and 4 and preferably equal to 3 and $R_7$ being an alkyl group or hydrogen atom.

**7.** Polyazacycloalkanes according to claim 6, **characterized in that** the grain size of the solid support derived from silica is between 20 and 400 mesh and preferably between 20 and 70 mesh.

**8.** Tri-, tetra- or penta-azamacrocyclic complexes of transition metals complying with one of the following formulas (IV), (V) or (VI):

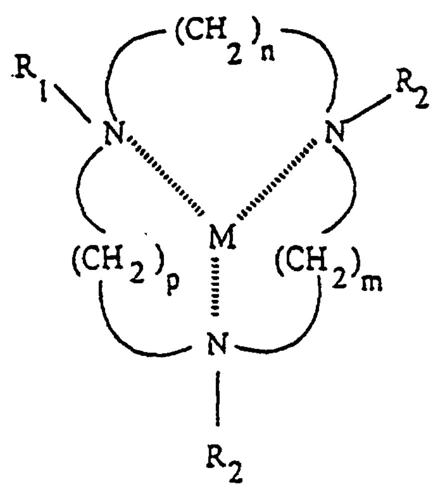

(IV)

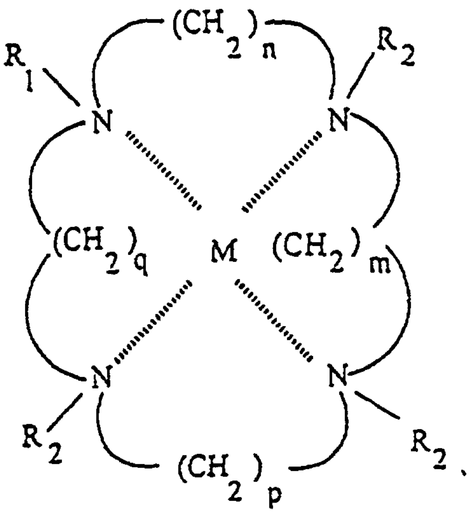

(V)

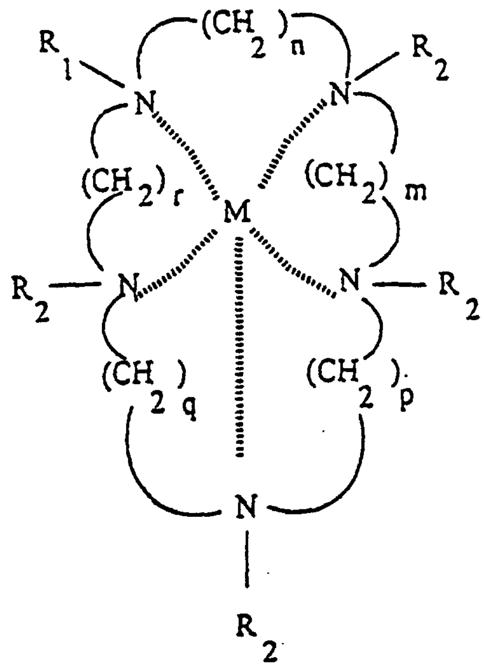

(VI)

in which n, m, p, q and r, which can be the same or different, are equal to 2 or 3, M is a transition metal chosen from among Ti, Mn, Fe, Co, Ni, Cu, Ru, Rh and Ir, $R_1$ is a solid support and $R_2$ represents the group $(CH_2)_2$-$R_3$, $R_3$ being a functional group chosen from within the group constituted by COOH, $CONH_2$, $CH_2OH$, CN or $COOR_4$, $R_4$ representing an alkyl or benzyl group or $R_2$ representing $(CH_2)_2$-$R_5$, $R_5$ representing COOH or $PO_3R_6$, $R_6$ representing hydrogen or an alkyl group.

**9.** Tri-, tetra- or penta-azamacrocyclic complexes according to claim 8, **characterized in that** $R_1$ is a solid support of the crosslinked or non-crosslinked, organic polymer type, preferably a radical of such a polymer having an alkyl halide termination or a silica derivative complying with the formula:

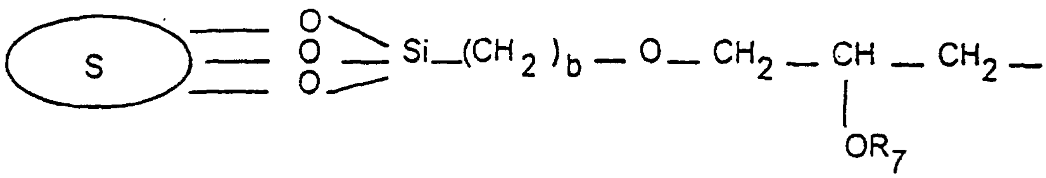

or the formula:

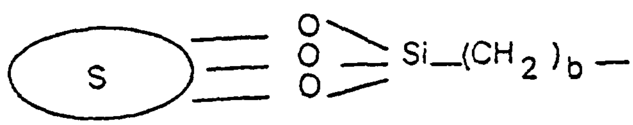

S representing a silica gel, b being between 1 and 4 and preferably equal to 3 and $R_7$ an alkyl group or a hydrogen atom.

**10.** Process for the production of a substituted polyazacycloalkane grafted on a solid support and consisting of reacting an excess of $CH_2$=CH-$R_3$, $R_3$ being a functional group chosen from among -COOH, -$CONH_2$, -$CH_2$-OH, -CN or -$COOR_4$, $R_4$ being an alkyl or benzyl group, in the presence of a polar solvent such as ethanol, preferably absolute ethanol, with polyazacycloalkane grafted on a solid support R1, complying with one of the following formulas (VII), (VIII) or (IX) :

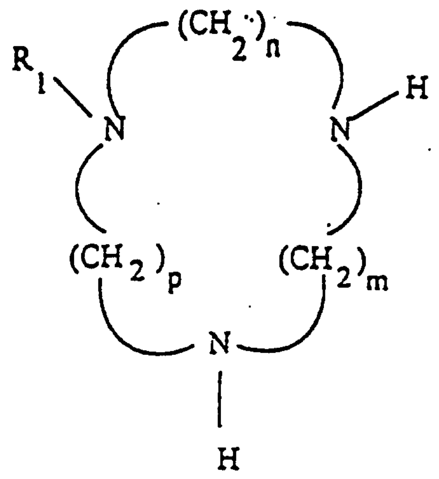

(VII)

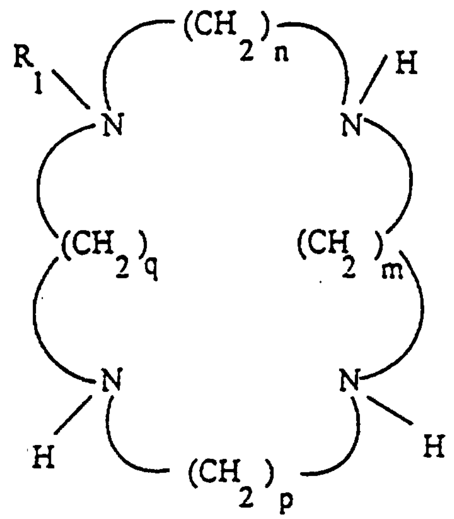

(VIII)

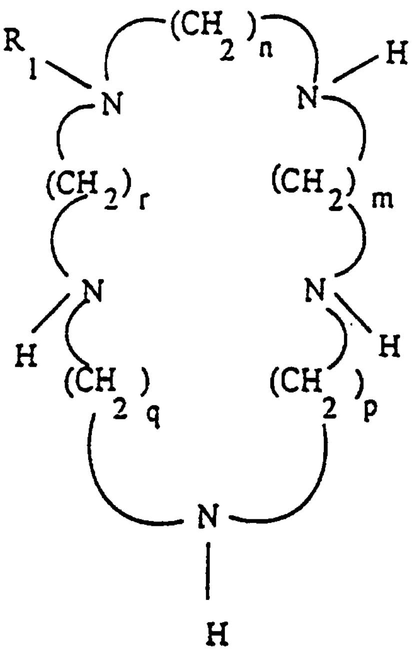

(IX)

in which n, m, p, q or r, which can be the same or different, are equal to 2 or 3 and $R_1$ is a solid support on which is grafted the nitrogen atom and chosen from among crosslinked or non-crosslinked, organic polymer, preferably a radical of such a polymer having an alkyl halide termination of the Merrifield (regiseered trademark) type or a silica derivaclve complying with one of the two aforementioned formulas, so as to obtain a polyazacycloalkane grafted on a substituted, solid support corresponding respectively to one of the following formulas (X), (XI) and (XII):

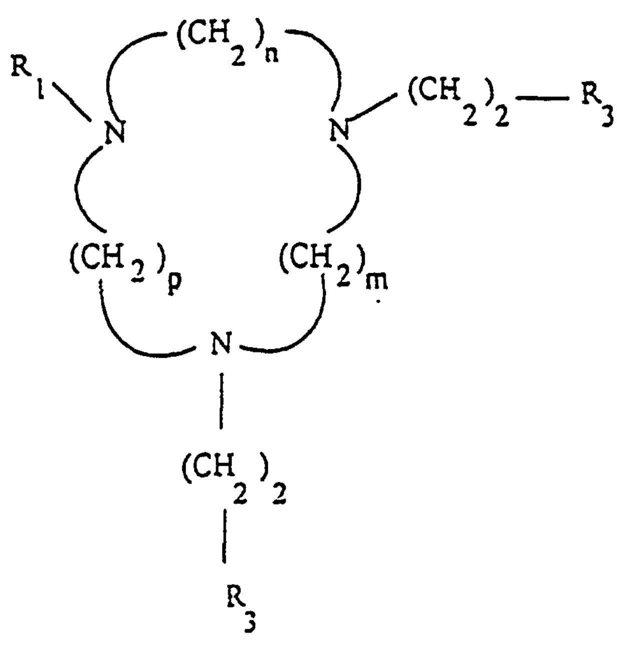

(X)

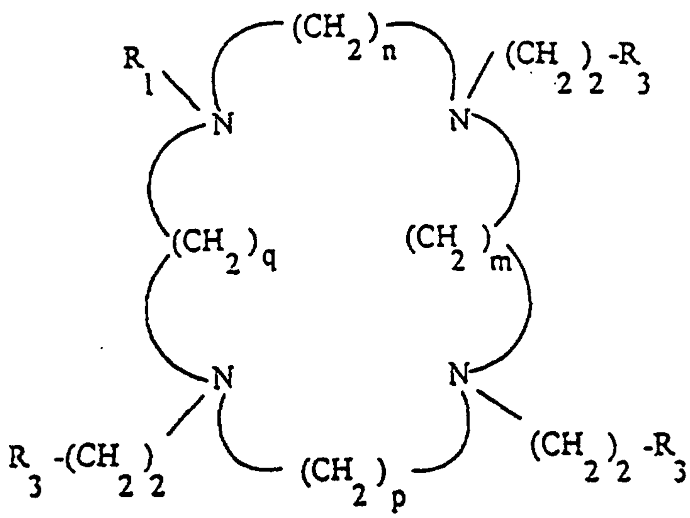

(XI)

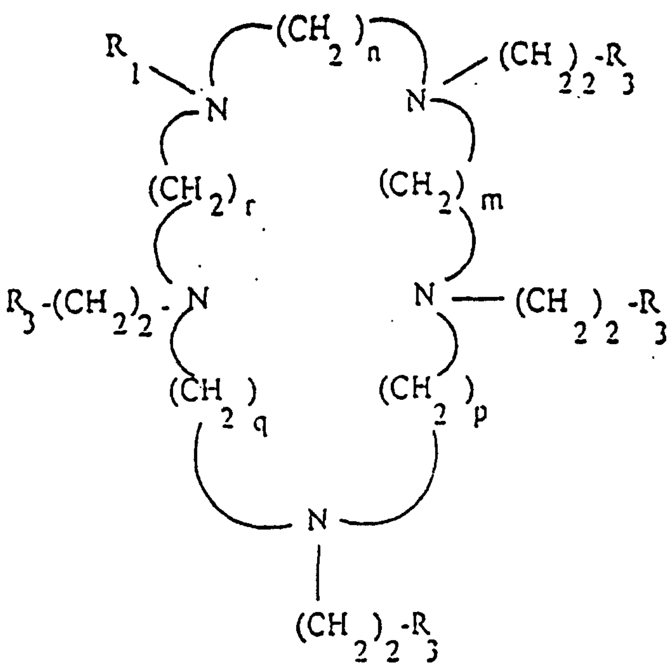

(XII)

in which n, m, p, q, r, $R_1$ and $R_3$ have the same meanings as hereinbefore.

**11.** Production process according to claim 10, **characterized in that** $R_1$ is a chloromethylated polystyrene radical.

**12.** Use of grafted polyazacycloalkane substituted according to any one of the claims 1 to 7 for the elimination of the metal cations of a liquid.

**13.** Use of grafted polyazacycloalkane substituted according to any one of the claims 1 to 7 for the elimination of the copper or aluminium of a fluid, particularly a biological fluid.

**14.** Use of grafted polyazacycloalkane obtained by the process according to claim 10 or 11 for the elimination of metal cations in a liquid.

15. Use of grafted polyazacycloalkane according to claim 12 or 14, **characterized in that** the metal cations are cations of transition metals, heavy metals, metals of group IIIa, lanthanides or actinides.

16. Use of grafted polyazacycloalkane according to claim 15, **characterized in that** the metal cations are chosen from among U, Pu, Am, Ce, Eu, Al, Gd, Cr, Mn, Fe, Co, Ni, Cu, Zn, Ag, Cd, Sn, Au, Hg or Pb.

17. Use of grafted polyazacycloalkane according to claim 12 or 14, **characterized in that** the liquid is pretreated by passage on silica gel.

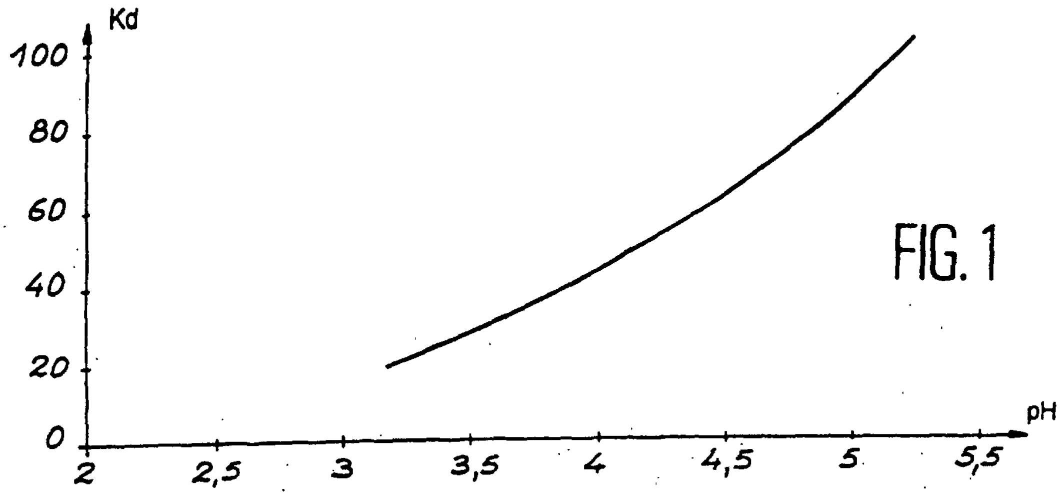


FIG. 1

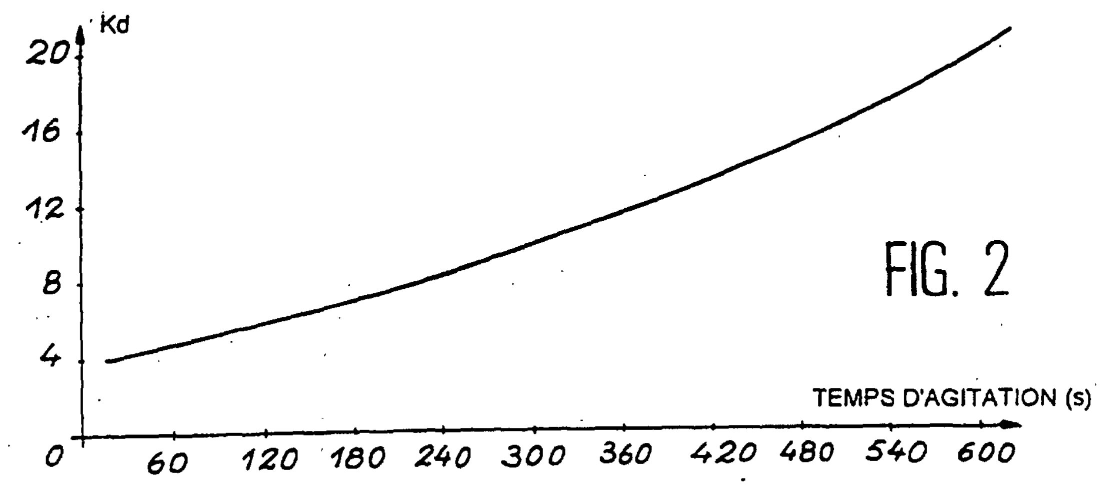


FIG. 2

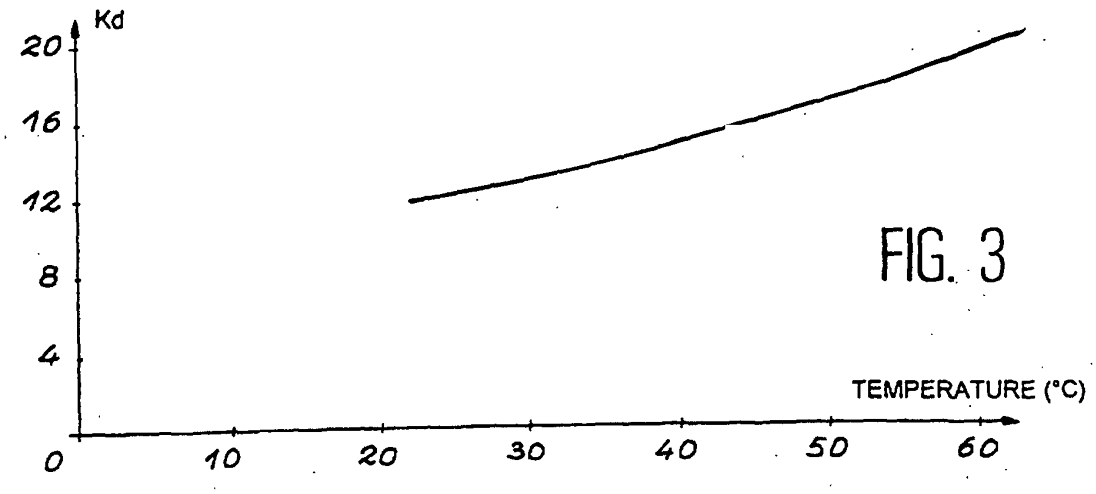


FIG. 3

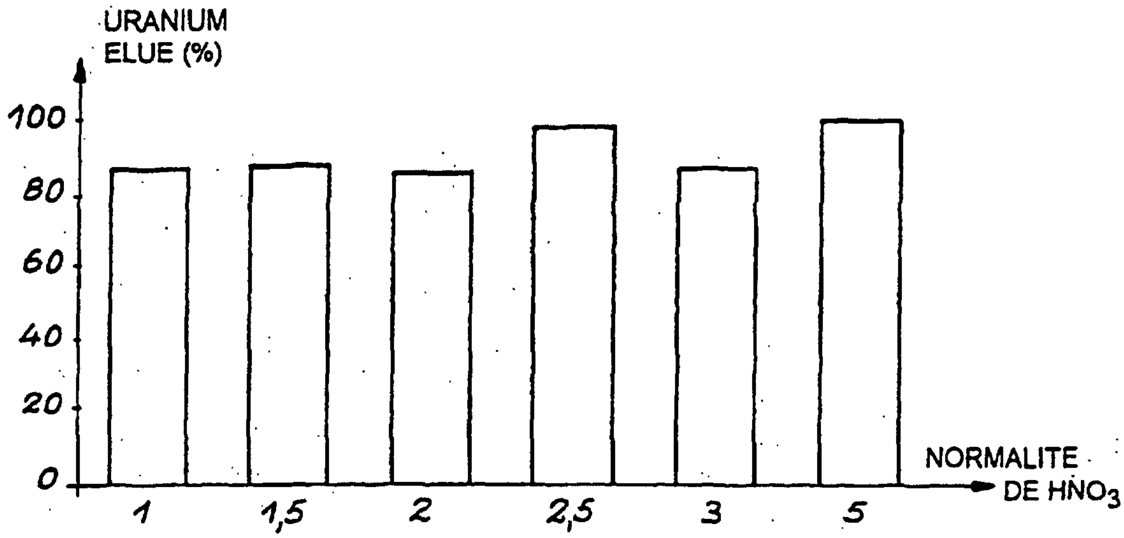
URANIUM
ELUE (%)
100
80
60
40
20
0
1
1,5
2
2,5
3
5
NORMALITE
DE $HNO_3$

FIG. 4

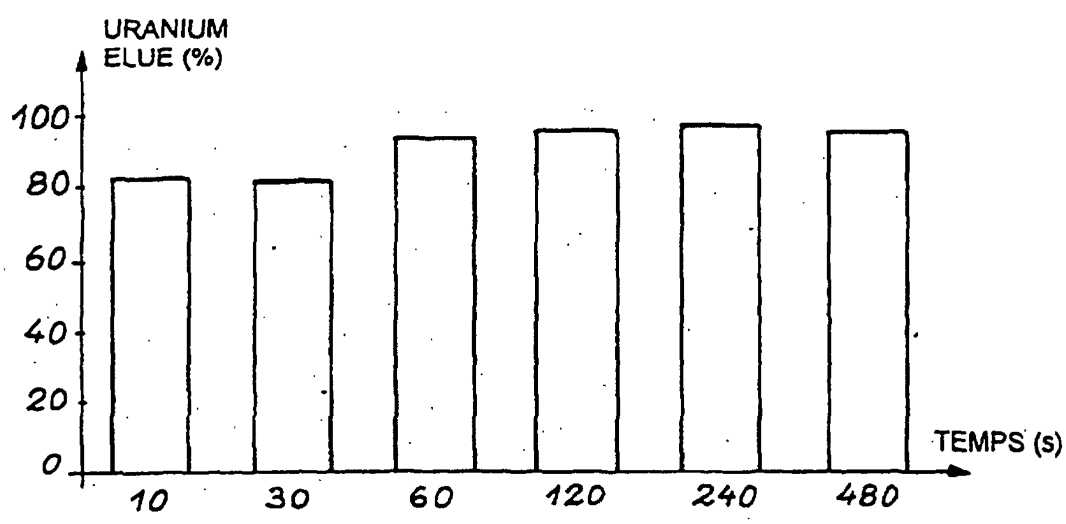
URANIUM
ELUE (%)
100
80
60
40
20
0
10
30
60
120
240
480
TEMPS (s)

FIG. 5

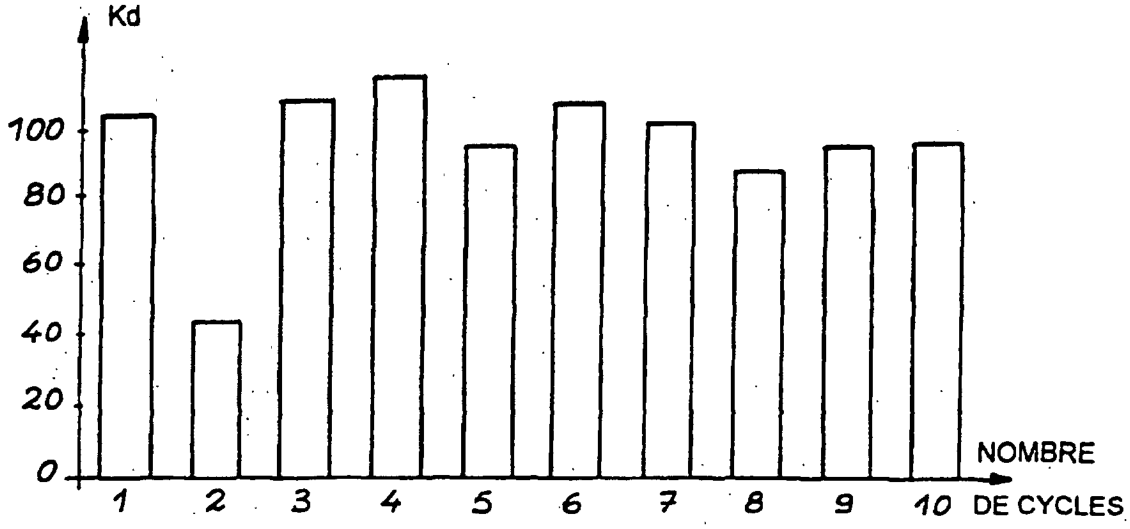
Kd
100
80
60
40
20
0
1
2
3
4
5
6
7
8
9
10
NOMBRE
DE CYCLES

FIG. 6

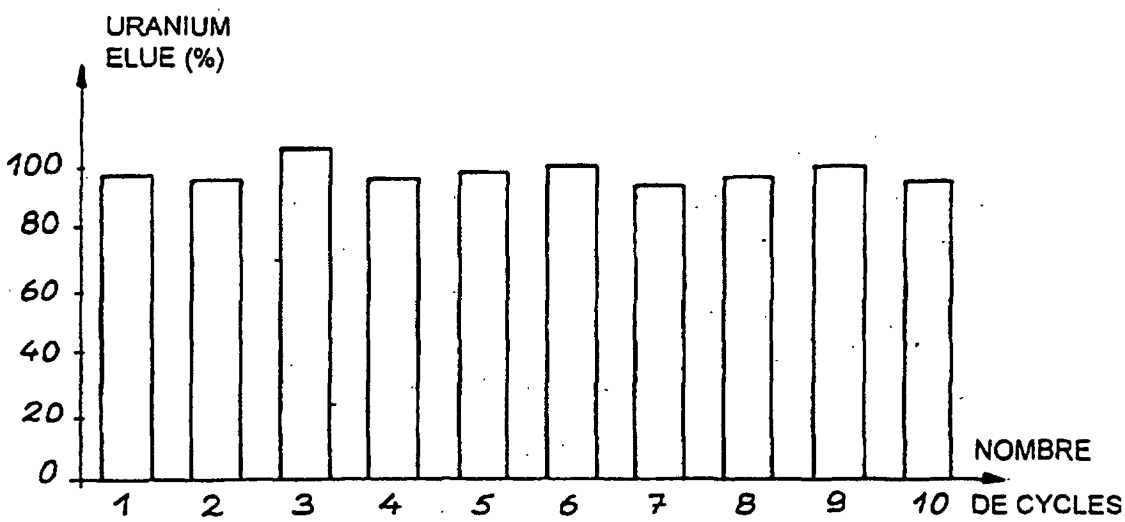
URANIUM
ELUE (%)
100
80
60
40
20
0
1
2
3
4
5
6
7
8
9
10
NOMBRE
DE CYCLES

FIG. 7

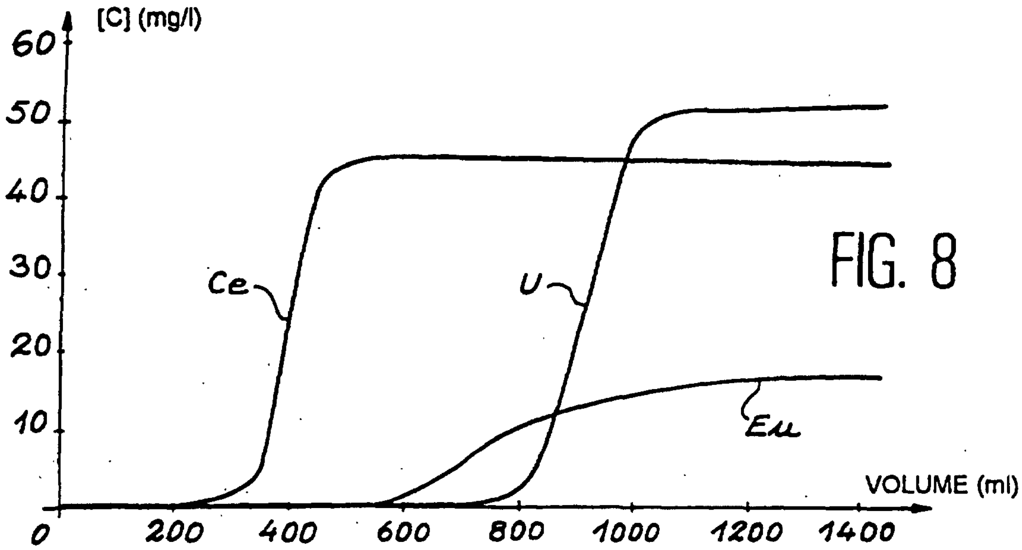


FIG. 8

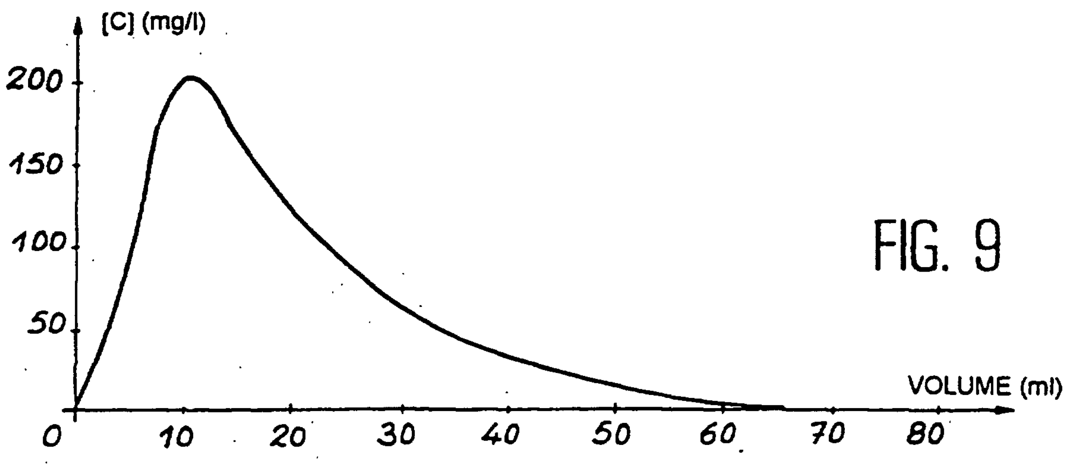


FIG. 9

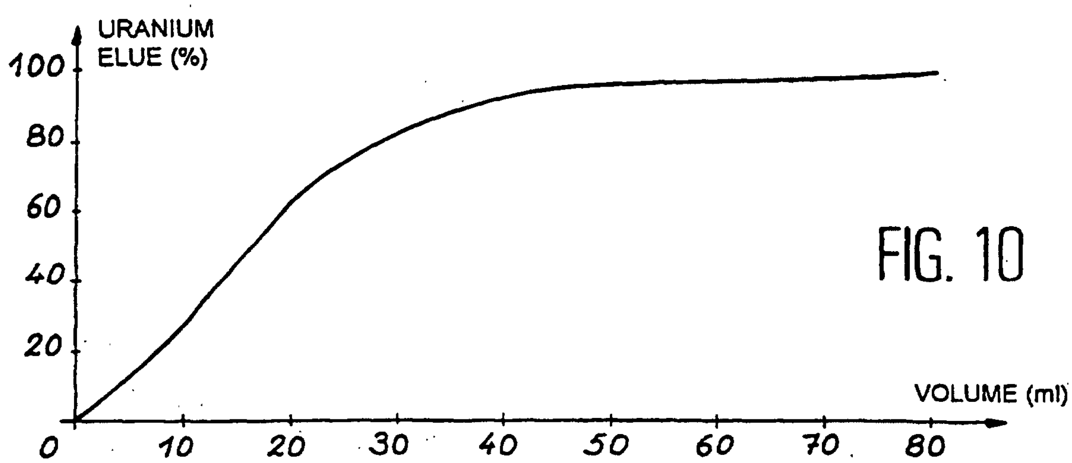


FIG. 10

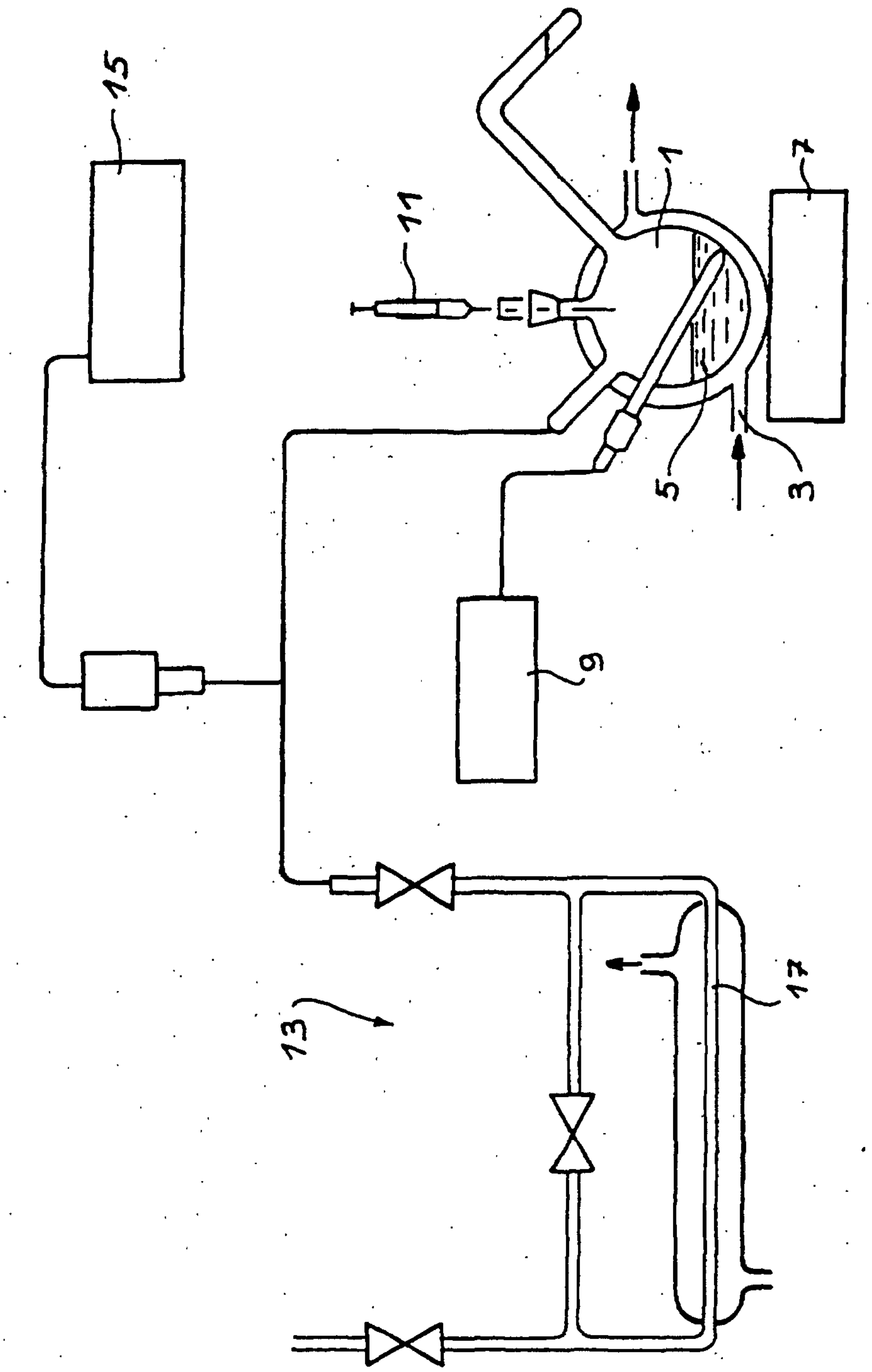


FIG. 11